(19) Europäisches Patentamt / European Patent Office / Office européen des brevets

(11) **EP 2 891 264 B1**

(12) **EUROPÄISCHE PATENTSCHRIFT**

(45) Veröffentlichungstag und Bekanntmachung des Hinweises auf die Patenterteilung:
**31.05.2017 Patentblatt 2017/22**

(51) Int Cl.:
***H04L 1/20*** (2006.01)   ***B60T 8/88*** (2006.01)
***H04L 1/22*** (2006.01)

(21) Anmeldenummer: **13753195.0**

(22) Anmeldetag: **28.08.2013**

(86) Internationale Anmeldenummer:
**PCT/EP2013/067823**

(87) Internationale Veröffentlichungsnummer:
**WO 2014/033172 (06.03.2014 Gazette 2014/10)**

(54) **VERFAHREN ZUM DURCHFÜHREN EINER SICHERHEITSFUNKTION EINES FAHRZEUGS UND SYSTEM ZUM DURCHFÜHREN DES VERFAHRENS**

METHOD FOR CONDUCTING A SAFETY FUNCTION OF A VEHICLE AND SYSTEM FOR PERFORMING THE METHOD

PROCÉDÉ DE MENER UNE FONCTION DE SÉCURITÉ D'UN VÉHICULE ET SYSTÈME POUR EFFECTUER LA MÉTHODE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **29.08.2012 DE 102012215343**

(43) Veröffentlichungstag der Anmeldung:
**08.07.2015 Patentblatt 2015/28**

(73) Patentinhaber: **Continental Automotive GmbH 30165 Hannover (DE)**

(72) Erfinder:
• ERDEM, Bettina
  **61462 Königstein-Mammolshain (DE)**
• ROSS, Hans-Leo
  **64653 Lorsch (DE)**

(56) Entgegenhaltungen:
• PURNENDU SINHA: "Architectural design and reliability analysis of a fail-operational brake-by-wire system from ISO 26262 perspectives", RELIABILITY ENGINEERING AND SYSTEM SAFETY, ELSEVIER APPLIED SCIENCE, GB, Bd. 96, Nr. 10, 15. März 2011 (2011-03-15) , Seiten 1349-1359, XP028249890, ISSN: 0951-8320, DOI: 10.1016/J.RESS.2011.03.013 [gefunden am 2011-03-25]
• SEO-HYUN JEON ET AL: "Automotive hardware development according to ISO 26262", ADVANCED COMMUNICATION TECHNOLOGY (ICACT), 2011 13TH INTERNATIONAL CONFERENCE ON, IEEE, 13. Februar 2011 (2011-02-13), Seiten 588-592, XP032013135, ISBN: 978-1-4244-8830-8

**Beschreibung**

Die Erfindung betrifft ein Verfahren zum Durchführen einer Sicherheitsfunktion eines Fahrzeugs gemäß dem Oberbegriff des Hauptanspruchs sowie ein Gesamtsystem zum Durchführen dieses Verfahrens gemäß dem Oberbegriff des Nebenanspruchs.

Moderne Fahrzeuge werden im zunehmenden Maße mit aktiven und passiven Schutzeinrichtungen ausgestattet. Bei den Schutzeinrichtungen handelt es sich allgemein um Funktionseinheiten des Fahrzeugs, die eingerichtet sind, spezielle Sicherheitsfunktionen teilweise oder vollständig automatisiert auszuführen. Typischerweise dient eine Sicherheitsfunktion dazu, nach Erkennen und Feststellen eines festgelegten gefährlichen Vorfalls oder einer gefährlichen Situation einen möglichst sicheren Zustand bzw. Betrieb des Fahrzeugs wieder herzustellen oder diesen aufrecht zu erhalten, um auf diese Weise Gefährdungen von Personen und Sachen sowie Personenschäden und Sachschäden zu vermeiden oder zumindest zu minimieren. Bekannte und bereits vielfach eingesetzte Sicherheitsfunktionen sind beispielsweise das Auslösen eines Airbags mittels eines Airbag-Systems und das Abbremsen einzelner oder mehrerer Räder des Fahrzeugs mittels eines ESC-Systems.

Purnendu Sinha beschreibt in "Architectural design and reliability analysis of a fail-operational brake-by-wire system from ISO 26262 perspectives", Reliability Engineering And System Safety, Elsevier Applied Science, GB, Bd. 96, Nr. 10, 15. März 2011, Seiten 1349-1359, ISSN: 0951-8320, eine Zuverlässigkeitsanalyse für ein Brake-by-Wire Bremssystem. In der Analyse wird für ein schematisch durch ein Blockdiagramm repräsentiertes Bremssystem ein Fehlerbaum aufgestellt und den einzelnen Blöcken jeweils eine Fehlerwahrscheinlichkeit zugeordnet wird.

Für die Durchführung von Sicherheitsfunktionen sind grundsätzlich Daten notwendig, welche für die Durchführung der Sicherheitsfunktion erforderliche Informationen beinhalten, beispielsweise über den Betriebs- oder den Bewegungszustand des Fahrzeugs. Diese Daten können beispielsweise aus Sensordaten einer Sensoreinheit des Fahrzeugs abgeleitet sein, beispielsweise einer Sensoreinheit zum Erfassen von Drehzahlen der Räder oder zum Erfassen einer Kollision des Fahrzeugs.

Gegenstand heutiger Entwicklungsarbeit sind auch solche Sicherheitsfunktionen, die vollständig oder teilweise die Kontrolle über den Bewegungszustand das fahrenden Fahrzeugs übernehmen und beispielsweise automatisch die Geschwindigkeit oder die Fahrtrichtung des Fahrzeugs ändern, beispielsweise um einen Auffahrunfall zu vermeiden oder einem Hindernis auszuweichen.

Allgemein und insbesondere im Fall der letztgenannten Sicherheitsfunktionen besteht jedoch häufig Ungewissheit darüber, ob die momentan für die Durchführung der jeweiligen Sicherheitsfunktion zur Verfügung stehenden Daten (und die in den Daten enthaltenen Informationen) für die Durchführung dieser Sicherheitsfunktion ausreichend sicher und zuverlässig sind. Insbesondere besteht Ungewissheit über die Qualität, die Verfügbarkeit und die Zuverlässigkeit eines bei der Übertragung der Daten verwendeten Kommunikationssystems und insbesondere Ungewissheit über die gesendete Datenqualität und über mögliche Qualitätsverluste beim Datenempfang. So können beispielsweise ein Datenverlust oder eine Datenverfälschung, etwa durch Auftreten einer Störung des Kommunikationssystems während einer Übertragung der Daten, die Durchführung der Sicherheitsfunktion beeinträchtigen. Eine solche Beeinträchtigung könnte beispielsweise darin bestehen, dass die Sicherheitsfunktion zu einem falschen Zeitpunkt oder unter Verwendung falsch berechneter Parameter durchgeführt wird.

Es ist somit die Aufgabe der vorliegenden Erfindung, ein Verfahren sowie ein System vorzuschlagen, welche jeweils eine möglichst zuverlässige und sichere Durchführung von Sicherheitsfunktionen eines Fahrzeugs erlauben.

Diese Aufgabe wird erfindungsgemäß durch ein Verfahren gemäß dem Hauptanspruch sowie durch ein Gesamtsystem gemäß dem Nebenanspruch gelöst. Weiterentwicklungen und spezielle Ausführungsverfahren des Verfahrens wie auch des Gesamtsystems ergeben sich mit den abhängigen Ansprüchen.

Somit wird bei dem hier vorgeschlagenen Verfahren zum Durchführen einer Sicherheitsfunktion eines Fahrzeugs mittels mindestens eines Kommunikationssystems Daten, die für das Durchführen der Sicherheitsfunktion erforderlich sind, auf eine Steuereinheit des Fahrzeugs übertragen. Mittels der Steuereinheit werden in Abhängigkeit von den übertragenen Daten Steuersignale erzeugt und auf eine Funktionseinheit des Fahrzeugs übertragen. Mittels der Funktionseinheit wird die Sicherheitsfunktion in Abhängigkeit von den Steuersignalen durchgeführt.

Außerdem werden Diagnosetests in zeitlichen Abständen wiederholt durchgeführt, wobei mit den Diagnosetests überprüft wird, ob in einem oder in mehreren zum Durchführen dieses Verfahrens verwendeten elektrischen, elektronischen und/oder programmierbaren Systemen eine Störung besteht oder eine Fehler aufgetreten ist, die oder die die Durchführung der Sicherheitsfunktion oder sicherheitsrelevante Daten beeinträchtigen kann. Diese Diagnosetests werden in jedem dieser Systeme durchgeführt.

Für das vorgeschlagene Verfahren ist es außerdem wesentlich, dass mittels des Kommunikationssystems Metadaten der Daten auf die Steuereinheit übertragen werden, wobei die Metadaten Informationen über zumindest eines der zum Durchführen des Verfahrens verwendeten elektrischen, elektronischen und/oder programmierbaren Systeme beinhalten. Vorzugsweise beinhalten diese Metadaten zumindest Informationen über das Kommunikationssystem. Mittels der Steuereinheit werden in Abhängigkeit von diesen Informationen mindestens ein Zuverlässigkeitswert der Daten ermittelt, der

- von der Wahrscheinlichkeit für das Auftreten von Störungen oder Fehler, die die Durchführung der Sicherheitsfunktion beeinträchtigen können, und
- von der Wahrscheinlichkeit, dass ein Auftreten dieser Störungen oder Fehler mittels der Diagnosetests und/oder durch einen Fahrer des Fahrzeugs rechtzeitig vor einer Beeinträchtigung der Sicherheitsfunktion erkannt wird, abhängig ist, wobei mittels der Steuereinheit in Abhängigkeit von dem mindestens einen Zuverlässigkeitswert geprüft wird, ob die übertragenen Daten für das Durchführen der Sicherheitsfunktion ausreichend zuverlässig sind. Außerdem kann mittels der Steuereinheit geprüft werden, ob die für das Durchführen der Sicherheitsfunktion (also die für das entsprechende Ansteuern der Funktionseinheit) erforderlichen Daten vollständig (inklusive der notwendigen Diagnoseinformationen) vorhanden sind.

Entsprechend umfasst das hier vorgeschlagene Gesamtsystem zum Durchführen einer Sicherheitsfunktion eines Fahrzeugs das Fahrzeug und ein Kommunikationssystem, das eingerichtet ist, Daten, die für das Durchführen der Sicherheitsfunktion erforderlich sind, auf eine Steuereinheit des Fahrzeugs zu übertragen. Die Steuereinheit ist eingerichtet, in Abhängigkeit von den übertragenen Daten Steuersignale zu erzeugen und auf eine Funktionseinheit des Fahrzeugs zu übertragen. Die Funktionseinheit ist eingerichtet, die Sicherheitsfunktion in Abhängigkeit von den Steuersignalen auszuführen.

Das Gesamtsystem ist außerdem eingerichtet ist, in zeitlichen Abständen wiederholt Diagnosetests durchzuführen zur Überprüfung, ob in einem oder in mehreren elektrischen, elektronischen und/oder programmierbaren Systemen des Gesamtsystems eine Störung besteht bzw. ein Fehler aufgetreten ist, die oder die die Durchführung der Sicherheitsfunktion beeinträchtigen kann.

Entsprechend dem vorgeschlagenen Verfahren ist auch für das Gesamtsystem wesentlich, dass das Kommunikationssystems außerdem eingerichtet ist, Metadaten der Daten auf die Steuereinheit zu übertragen, wobei die Metadaten Informationen über zumindest eines der genannten Systeme des Gesamtsystems beinhalten. Vorzugsweise beinhalten diese Metadaten zumindest Informationen über das Kommunikationssystem. Ferner ist die Steuereinheit eingerichtet, in Abhängigkeit von diesen Informationen mindestens ein Zuverlässigkeitswert der Daten zu ermitteln, der

- von der Wahrscheinlichkeit für das Auftreten von Störungen oder Fehlern, die die Durchführung der Sicherheitsfunktion beeinträchtigen können und
- von der Wahrscheinlichkeit, dass ein Auftreten dieser Störungen oder Fehlern mittels der Diagnosetests und/oder durch einen Fahrer des Fahrzeugs rechtzeitig vor einer Beeinträchtigung der Sicherheitsfunktion erkannt wird,

abhängig ist, und in Abhängigkeit von dem mindestens einen Zuverlässigkeitswert zu prüfen, ob die übertragenen Daten für das Durchführen der Sicherheitsfunktion ausreichend zuverlässig sind. Außerdem kann die Steuereinheit eingerichtet sein zu prüfen, ob die für das Durchführen der Sicherheitsfunktion erforderlichen Daten vollständig vorhanden sind.

Für die tatsächliche Durchführung der Sicherheitsfunktion ist typsicherweise außerdem erforderlich, dass unter Verwendung der übertragenen Daten und der darin enthaltenen Informationen eine bestimmte Gefahrensituation oder ein bestimmter gefährlicher Vorfall erkannt worden ist, wie weiter unten anhand einiger Beispiele erläutert wird.

Die folgenden Erläuterungen beziehen sich gleichermaßen auf das vorgeschlagene Verfahren sowie auf das vorgeschlagene Gesamtsystem. Dies bedeutet insbesondere, dass solche Beispiele Weiterentwicklungen und Ausführungsformen, die nur im Zusammenhang mit dem Verfahren oder nur im Zusammenhang mit dem Gesamtsystem beschrieben werden, entsprechend auch auf das Gesamtsystem bzw. auf das Verfahren übertragen werden können. Unter der Formulierung "eingerichtet sein" soll verstanden werden, dass die betreffende Funktionseinheit oder das betreffende (elektrische, elektronische und/oder programmierbare) System so ausgestaltet und/oder programmiert ist, dass die nachfolgenden Funktionen mittels der Funktionseinheit bzw. dem System ausführbar sind. Beispielsweise kann die Funktionseinheit bzw. das System die hierfür erforderlichen elektrischen, elektronischen und/oder programmierbaren Bauteile umfassen, wie beispielsweise Schaltungen, Controller, Mikrochips, Sensoren, Datenspeicher, Schnittstellen, Datenleitungen, Empfangseinheiten, Sendeeinheiten etc. Insbesondere kann das Kommunikationssystem ein WLAN-Netzwerk und/oder ein Mobilfunknetz und/oder ein anderes drahtgebundenes oder drahtloses Datenübertragungssystem umfassen und kann die Steuereinheit mit hierzu kompatiblen Empfangseinheiten bzw. Datenschnittstellen ausgestattet sein.

Das vorgeschlagene Verfahren und Gesamtsystem zeichnet sich durch eine besonders hohe sogenannte "funktionale Sicherheit" aus, da die Prüfung der Sicherheit und Zuverlässigkeit der für die Durchführung benötigten Daten direkt in das Verfahren bzw. in das Gesamtsystem integriert ist. Daher ist es beispielsweise möglich, wie weiter unten beschrieben, die Sicherheitsfunktion unter Berücksichtigung des Ergebnisses dieser Prüfung durchzuführen, beispielsweise nur dann, wenn die Prüfung positiv ausgefallen ist, d. h. wenn die zum Durchführen der Sicherheitsfunktion erforderlichen Daten hinreichend zuverlässig (und vollständig) sind.

Unter der genannten funktionalen Sicherheit wird im vorliegenden Fall der Teil der Gesamtsicherheit des Gesamtsystems bezeichnet, der von der korrekten Funktion der sicherheitsbezogenen elektrischen, elektronischen und programmierbaren Systeme (im Folgenden auch als E/E/PE-Systeme bezeichnet) des Gesamtsystems und gegebenenfalls externer Einrichtungen abhängt. Im vorliegenden Fall werden alle solche E/E/PE-Systeme des vorgeschlagenen Gesamtsystems als sicherheitsbezogen oder sicherheitsrelevant bezeichnet, die für die Durchführung des vorgeschlagenen Verfahrens verwendet werden und bei denen im Fall einer Störung dieser E/E/PE-Systeme, also beim Auftreten eines Fehlers in diesen E/E/PE-Systeme, die Durchführung der Sicherheitsfunktion durch diese Störung bzw. durch diesen Fehler beeinträchtigt werden kann. Entsprechend soll hier und im Folgenden unter einer Störung bzw. eines Fehlers eines E/E/PE-Systems eine nicht normale Bedingung des jeweiligen E/E/PE-Systems verstanden werden, die dazu führt, dass das System seine Funktion nicht mehr oder nur eingeschränkt erfüllen kann. Störungen oder Fehler eines E/E/PE-Systems, die alleine oder in Kombination mit anderen Störungen oder Fehlern die Durchführung der Sicherheitsfunktion beeinträchtigen, sofern sie nicht rechtzeitig erkannt werden, werden im Folgenden auch als funktionale Fehler, als sicherheitsrelevante Fehler oder als Fehler mit sicherheitsrelevantem Effekt bezeichnet.

Mit dem vorgeschlagenen Verfahren und Gesamtsystem können alle Risiken aufgrund aller funktionalen Fehler, die während der Konzeptphase der jeweiligen Sicherheitsfunktion erkannt und analysiert worden sind, auch während der Anwendungsphase automatisch bzw. automatisiert berücksichtigt und somit auch automatisch bzw. automatisiert kontrolliert und minimiert werden. Beispielsweise kann der genannte Zuverlässigkeitswert der Daten bereits während der Konzeptphase als Prüfkriterium definiert werden. Während der Anwendungsphase bzw. der Inbetriebnahme der Sicherheitsfunktion wird dieser Zuverlässigkeitswert genutzt, um die Zuverlässigkeit und sichere Verfügbarkeit der Daten automatisiert bzw. automatisch zu prüfen. Der Zuverlässigkeitswert dient also als elektronisch verwertbarer "Qualifier", der die Verfügbarkeit und die Sicherheitsintegrität der Information elektronisch verwertbar darstellt. Mit dem hier vorgeschlagenen Verfahren und Gesamtsystem wird also eine Online-Analyse der Zuverlässigkeit, der Verfügbarkeit und Güte (sog. "Safety Integrity") der durch das Kommunikationssystem übertragenen Daten und Informationen ermöglicht.

Bei den für die Durchführung der Sicherheitsfunktion erforderlichen Daten kann es sich beispielsweise um Messdaten oder Messsignalen einer Sensoreinheit oder einer Messeinheit des Gesamtsystems handeln oder um aus solchen Messdaten oder Messsignalen abgeleitete Informationen. Die Messeinheit kann in einem anderen Fahrzeug oder in einer (ortsfesten) Infrastruktur integriert sein. Dann sind dieses Fahrzeug oder diese Infrastruktur Bestandteile des hier vorgeschlagenen Gesamtsystems. Die Daten können somit auch von einem Kommunikationspartner außerhalb des Fahrzeugs stammen und/oder übertragen werden, beispielsweise von einem anderen Fahrzeug (car2car-Kommunikation, C2C) oder einer (ortsfesten) Infrastruktur (car2infrastructure-Kommunikation, C2X). Die Daten können auch über eine Kette mehrerer solcher Kommunikationspartner (Fahrzeug, Infrastruktur) auf die Steuereinheit des Fahrzeugs übertragen werden. Diese Kette von Kommunikationspartnern ist dann ein Bestandteil des Kommunikationssystems und somit auch Bestandteile des hier vorgeschlagenen Gesamtsystems. Die Kommunikation kann sowohl drahtlos als auch drahtgebunden sein. Weitere Beispiele hierzu werden weiter unten diskutiert.

Aus den für die Durchführung der Sicherheitsfunktion erforderlichen Daten kann sich insbesondere ergeben, dass momentan kein Anlass für die Durchführung der Sicherheitsfunktion besteht. Das bedeutet, dass nicht in jedem Fall, in dem die für die Durchführung der Sicherheitsfunktion erforderlichen Daten vollständig vorhanden und hinreichend zuverlässig sind, die Sicherheitsfunktion auch tatsächlich durchgeführt wird. In der Regel ist jedoch vorgesehen, dass die Sicherheitsfunktion, wie im Folgenden beschrieben wird, nur unter der notwendigen (aber eben nicht hinreichenden) Bedingung ausgeführt wird, dass die hierfür notwendigen Daten vollständig vorhanden und hinreichend zuverlässig sind.

Die genannten Diagnosetests zum Detektieren der genannten Störungen bzw. Fehlern können beispielsweise jeweils mittels der E/E/PE-Systeme des Gesamtsystems selbst automatisch durchgeführt werden (Selbsttests dieser Systeme). Es ist aber möglich, dass entsprechend eingerichtete Diagnosesysteme zur Durchführung der Diagnosetests verwendet werden. Auf diese Weise können Diagnosetests durchgeführt werden, die das Gesamtsystem übergreifen. Eine Störung ist dann rechtzeitig detektiert, wenn noch genügend Zeit für entsprechende Gegenmaßnahmen verbleibt, um durch diese Störung hervorgerufene oder bedingte Gefährdungen oder Schäden zu verhindern oder zumindest auf ein akzeptables Maß zu minimieren.

Die genannten Metadaten können beispielsweise Werte der oben genannten Wahrscheinlichkeiten oder Werte von einer oder mehreren davon abhängigen Größen beinhalten, wie etwa die weiter unten diskutierten Fehlerraten, Diagnosedeckungsgrade, Metriken oder Maße. Die Metadaten können zusätzlich oder alternativ auch Gerätekennungen eines, mehrere oder aller der sicherheitsrelevanten E/E/PE-Systeme des Gesamtsystems beinhalten. In letzterem Fall können auf Grundlage dieser Gerätekennungen die zu den jeweiligen E/E/PE-Systemen gehörigen Werte der genannten Wahrscheinlichkeiten oder der hiervon abhängigen Fehlerraten, Diagnosedeckungsgrade, Metriken und/oder Maße, beispielsweise mittels der Steuereinheit aus einem Speicher oder einer Datenbank ausgelesen und anschließend, wie beschrieben, zum Ermitteln des mindestens einen Zuverlässigkeitswertes der Daten verwendet werden.

Bei den genannten sicherheitsrelevanten E/E/PE-Systemen kann es sich insbesondere um eine Messeinheit bzw. Sensoreinheit, eine Sendeeinheit des Kommunikationssystems, einen Kommunikationskanal des Kommunikationssystems (also beispielsweise ein WLAN-System, Mobilfunksystem wie etwa UMTS, LTE, GPS, GPRS oder EDGE) sowie um eine Empfängereinheit der Steuereinheit handeln. Ferner sind auch die Steuereinheit und die Funktionseinheit typischerweise sicherheitsrelevante E/E/PE-Systeme des Gesamtsystems.

Bei der genannten Prüfung, ob die für das Durchführen der Sicherheitsfunktion erforderlichen übertragenen Daten hinreichend zuverlässig sind, kann beispielsweise vorgesehen sein, dass der Zuverlässigkeitswert der Daten mit einem vorgegebenen Schwellwert verglichen werden. Beispielsweise kann vorgesehen sein, dass die Daten dann als hinreichend sicher bewertet werden, falls der Zuverlässigkeitswert größer (oder alternativ kleiner) als dieser Schwellwert ist. Der Schwellwert kann in Abhängigkeit des Risikopotenzials (beispielsweise definiert unter Berücksichtigung der zur Sicherheitsfunktion gehörigen Schadenseintrittswahrscheinlichkeit und dem Schadensausmaß) der jeweiligen Sicherheitsfunktion festgelegt sein, d. h. , je höher das Risikopotenzial der Sicherheitsfunktion ist, umso größer ist typischerweise auch der zugehörige vorgegebene Schwellwert gewählt. Im Fall mehrerer Zuverlässigkeitswerte kann vorgesehen sein, dass jeder dieser Zuverlässigkeitswerte mit einem vorgegebenen Schwellwert verglichen wird und beispielsweise die Daten nur dann als hinreichend sicher bewertet werden, wenn jeder dieser Zuverlässigkeitswert größer (oder alternativ kleiner) als der jeweilige Schwellwert ist.

Als Zuverlässigkeitswerte kommen allgemein Werte von Maßen der Zuverlässigkeit der Daten in Frage. Allgemein sind diese Maße sind von den oben genannten Wahrscheinlichkeiten abhängig, also von der Wahrscheinlichkeit für das Auftreten von Störungen oder Fehler, die die Durchführung der Sicherheitsfunktion beeinträchtigen können, und von der Wahrscheinlichkeit, dass ein Auftreten dieser Störungen und Fehler mittels der Diagnosetests und/oder durch einen Fahrer des Fahrzeugs rechtzeitig vor einer Beeinträchtigung der Sicherheitsfunktion erkannt wird. Es ist auch möglich, dass einer oder mehrere des mindestens einen Zuverlässigkeitswerts durch den Wert einer dieser Wahrscheinlichkeiten selbst gegeben ist oder sind. Als Zuverlässigkeitswerte der Daten kommen insbesondere die weiter unten diskutierten Fehlerraten, Diagnosedeckungsgrade und Metriken in Frage.

Falls die Prüfung ergibt, dass die für das Durchführen der Sicherheitsfunktion erforderlichen Daten nicht vollständig vorhanden oder nicht hinreichend zuverlässig sind, kann vorgesehen sein, dass

- die auf die Steuereinheit übertragenen Daten nicht zum Ansteuern der Funktionseinheit verwendet werden und/oder
- mittels der Steuereinheit ein Deaktivierungssignal an die Funktionseinheit gesendet wird, wobei vorzugsweise die Funktionseinheit nach Empfang dieses Deaktivierungssignals automatisch in einen Sicherheitsmodus übergeht, in dem die Sicherheitsfunktion nicht durchgeführt werden kann. Auf diese Weise kann sichergestellt werden, dass die Sicherheitsfunktion nur dann durchgeführt werden kann, falls die Prüfung ergibt, dass die hierfür erforderlichen Daten hinreichend sicher und zuverlässig sind.

Außerdem wird auf diese Weise das Verfahren für den Fall determiniert, in dem die Daten nicht vollständig vorhanden oder nicht ausreichend zuverlässig sind.

Zusätzlich oder alternativ ist es möglich, dass mittels der Steuereinheit ein Signalgeber des Fahrzeugs angesteuert wird, dem Fahrer das Ergebnis der Prüfung zu signalisieren, also ob die für das Durchführen der Sicherheitsfunktion erforderlichen Daten vollständig vorhanden und hinreichend zuverlässig sind oder nicht. Zusätzlich oder alternativ hierzu kann vorgesehen sein, dass, falls die Prüfung ergibt, dass die für das Durchführen der Sicherheitsfunktion erforderlichen Daten nicht vollständig vorhanden oder nicht hinreichend zuverlässig sind, mittels der Steuereinheit der Signalgeber angesteuert wird, dem Fahrer die momentane Nichtverfügbarkeit der Sicherheitsfunktion zu signalisieren.

Auf diese Weise ist der Fahrer immer über die Verfügbarkeit der Sicherheitsfunktion unterrichtet. Dies kann den Fahrer darin unterstützen, sein Fahrverhalten an das Vorhandensein oder Nichtvorhandensein der Sicherheitsfunktion(en) anzupassen und gegebenenfalls entsprechend defensiv auszurichten. Falls beispielsweise dem Fahrer auf diese Weise rechtzeitig signalisiert wird, dass nicht ausreichend sichere und zuverlässige Daten zur Durchführung von automatisierten Ausweich- oder Bremsmanöver oder anderen (teil-)automatisierten Eingriffen in den Fahrbetrieb des Fahrzeugs vorhanden sind, kann sich der Fahrer hierauf einstellen und entsprechend vorsichtig fahren. Auf diese Weise kann außerdem gewährleistet werden, dass der Fahrer des Fahrzeugs jeder Zeit für das sichere Führen des Fahrzeugs verantwortlich bleibt und sich nur dann auf die automatische Durchführung der Sicherheitsfunktion, wie etwa ein autonomes, automatisiertes oder teilautomatisiertes Eingreifen in die Führung des Fahrzeugs verlässt, wenn ihm signalisiert worden ist, dass die hierfür erforderlichen Daten vollständig vorhanden und ausreichend zuverlässig sind. Dies entspricht den Vorgaben des "Wiener Übereinkommens über den Straßenverkehr", wonach jederzeit gewährleistet sein muss, dass der Fahrer eines Fahrzeugs die Hoheit über das Fahrzeug innehat.

Es ist möglich, dass der mindestens eine Zuverlässigkeitswert in Abhängigkeit von mindestens einer der folgenden Fehlerraten ermittelt wird: $I_{SPF}$, $I_{RF}$, $I_{MPF}$,

$I_{MPF,L}$, $I_{MPF,D}$, $I_{MPF,P}$, $I_S$. Diese Fehlerraten (im Englischen häufig als "Failure in Time" bezeichnet) sind statistische Größen und beziehen sich jeweils auf eine bestimmte Art von Fehlern. Definitionen der einzelnen Fehlerarten sind unten aufgeführt. Außerdem bezieht sich jede dieser Fehlerraten typischerweise auf jeweils nur eines der sicherheitsrelevanten E/E/EP-Systeme, das für die die Durchführung des Verfahrens verwendet wird und Teil des vorgeschlagenen Gesamtsystems ist, also nur auf solche Fehler, die in diesem E/E/EP-System auftreten können. Für jedes dieser E/E/EP-Systeme können also eigene Fehlerraten definiert sein.

Jede der genannten Fehlerraten eines gegebenen sicherheitsrelevanten E/E/EP-Systems gibt die mittlere Anzahl von Fehlern einer bestimmten Fehlerart an, die innerhalb einer Zeiteinheit in dem jeweiligen E/E/EP-System auftreten. Eine typische Einheit hierfür ist $10^{-9}$ Fehler pro Stunde. Der Kehrwert einer dieser Fehlerraten ist die sogenannte Fehlerüberlebenszeiten ("Mean Time Between Failures", MTBF, oder "Mean Time to Failure", MTTF), also die mittlere Zeitdauer zwischen zwei auftretenden Fehlern. Die Fehlerraten werden typischerweise für die Betriebszeit des jeweiligen E/E/EP-Systems definiert und sind somit jeweils ein Maß dafür, dass im betrachteten E/E/EP-System ein Fehler bestimmter Art während der Betriebszeit des E/E/EP-Systems auftritt. Im Einzelnen sind folgende Definitionen der einzelnen Arten von Fehlern, auf die sich Fehlerraten jeweils beziehen, möglich:

$I_{SPF}$: Fehler, die sogar dann, wenn sie alleine auftreten, funktional sind, also einen sicherheitsrelevanten Effekt haben, und deren Auftreten nicht durch die Diagnosetests überprüft werden und somit durch die Diagnosetests auch nicht rechtzeitig vor einer Beeinträchtigung der Sicherheitsfunktion festgestellt werden können;

$I_{RF}$: Fehler, die sogar dann, wenn sie alleine auftreten, funktional sind, also einen sicherheitsrelevanten Effekt haben, und deren Auftreten zwar durch die Diagnosetests überprüft werden aber dennoch durch die Diagnosetests nicht rechtzeitig vor einer Beeinträchtigung der Sicherheitsfunktion festgestellt werden (die Diagnosetests haben also einen sog. Schlupf bezüglich dieser Art von Fehlern);

$I_{MPF}$: Fehler, die, wenn sie gleichzeitig mit anderen Fehlern auftreten oder vorliegen, funktional sind, also einen sicherheitsrelevanten Effekt haben, sofern sie nicht rechtzeitig vor einer Beeinträchtigung der Sicherheitsfunktion festgestellt werden;

$I_{MPF,L}$: Fehler, die, wenn sie gleichzeitig mit anderen Fehlern auftreten oder vorliegen, einen sicherheitsrelevanten Effekt haben, also funktional sind, und deren Auftreten nicht durch die Diagnosetests überprüft werden und somit durch die Diagnosetests auch nicht rechtzeitig festgestellt werden können. Diese Fehler werden auch als latente Fehler bezeichnet;

$I_{MPF,D}$: Fehler, die, wenn sie gleichzeitig mit anderen Fehlern auftreten oder vorliegen, einen sicherheitsrelevanten Effekt haben, also funktional sind, und deren Auftreten durch die Diagnosetests überprüft werden und auch rechtzeitig vor einer Beeinträchtigung der Sicherheitsfunktion festgestellt werden;

$I_{MPF,P}$: Fehler, die, wenn sie gleichzeitig mit anderen Fehlern auftreten oder vorliegen, einen sicherheitsrelevanten Effekt haben, also funktional sind, und deren Auftreten durch den Fahrer des Fahrzeugs rechtzeitig festgestellt werden;

$I_S$: Fehler, die, unabhängig davon, ob sie festgestellt werden oder nicht, keinen sicherheitsrelevanten Effekt haben, die also nicht funktional sind.

Es wird ferner definiert $I_{MPF,DP} = I_{MPF,D} + I_{MPF,P}$. Es gilt $I_{MPF} = I_{MPF,L} + I_{MPF,DP}$. Außerdem gilt $I = I_{SPF} + I_{RF} + I_{MPF,L} + I_{MPF,DP} + I_S$, wobei I die allgemeine Fehlerrate des betrachteten E/E/EP-Systems des Gesamtsystems ist und ein Maß für die Wahrscheinlichkeit ist, dass irgendein (funktionaler oder nicht funktionaler) Fehler in diesem E/E/EP-System auftritt.

Die so definierten Fehlerraten der E/E/EP-Systeme sind mit den in der Norm ISO 26262 mit denselben Symbolen bezeichneten Größen identisch, siehe etwa Kapitel 5, in Annex C, Abschnitt C1 der ISO 26262.

Wird also der genannte mindestens eine Zuverlässigkeitswert der Daten beispielsweise in Abhängigkeit einer oder mehrere der Größen $I_{SPF}$, $I_{RF}$, $I_{MPF}$, $I_{MPF,L}$, $I_{MPF,P}$, $L_{MPF,D}$ der E/E/EP-Systeme ermittelt, so ist gewährleistet, dass der Zuverlässigkeitswert von der Wahrscheinlichkeit für das Auftreten von Störungen oder Fehlern, die die Durchführung der Sicherheitsfunktion beeinträchtigen können, sowie und von der Wahrscheinlichkeit, dass ein Auftreten dieser Störungen oder Fehler mittels der Diagnosetests und/oder durch einen Fahrer des Fahrzeugs rechtzeitig vor einer Beeinträchtigung der Sicherheitsfunktion erkannt wird, abhängig ist. Insbesondere ist es möglich, dass einer oder mehrere oder jeder des mindestens einen Zuverlässigkeitswertes als eine der Fehlerraten $I_{SPF}$, $I_{RF}$, $I_{MPF}$, $I_{MPF,L}$, $I_{MPF,P}$ eines der sicherheitsrelevanten E/E/EP-Systeme oder in Abhängigkeit von diesen Fehlerraten definiert ist.

Beispielsweise kann zumindest ein Zuverlässigkeitswert des mindestens einen Zuverlässigkeitswerts der Daten in Abhängigkeit von zumindest einem Wert eines Diagnosedeckungsgrades ($DC_{RF}$)

$$DC_{RF} = \left(1 - \frac{\lambda_{RF}}{\lambda}\right) \times 100$$

mindestens eines der zum Durchführen des Verfahrens verwendeten sicherheitsrelevanten E/E/PE-Systems des Gesamtsystems ermittelt wird. Der Diagnosedeckungsgrad ist ein besonders aussagekräftiges Maß für die Zuverlässigkeit eines sicherheitsrelevanten E/E/PE-Systems. Diese Größe entspricht der in ISO 26262, Kapitel 5, Annex C, in Gleichung C.3 definierten Größe $K_{DC,RF}$. Es ist auch möglich, dass für mehrere oder für jedes der sicherheitsrelevanten E/E/PE-Systeme des Gesamtsystems jeweils der Wert des Diagnosedeckungsgrades $DC_{RF}$ ermittelt wird. Anschließend können beispielsweise diese Werte als Zuverlässigkeitswerte der Daten verwendet werden. Es ist alternativ oder zusätzlich auch möglich, einen der Zuverlässigkeitswerte bzw. den Zuverlässigkeitswert als Produkt der Werte dieser Diagnosedeckungsgrade zu bestimmen, also als $DC_{RF,1}$ x $DC_{RF,2}$ x $DC_{RF,3}$ x ... x $DC_{RF,n}$, wobei n die Anzahl der sicherheitsrelevanten E/E/PE-Systeme des Gesamtsystems ist. Dieses Produkt entspricht dem sogenannten "Lusser-Gesetz" und ist ein besonders aussagekräftiges Maß für die Zuverlässigkeit des Gesamtsystems und somit auch der Daten, insbesondere dann, wenn für jedes der sicherheitsrelevanten E/E/PE-Systeme des Gesamtsystems der jeweilige Diagnosedeckungsgrad bekannt ist (und in das Produkt als einer der Faktoren eingeht) und in jedem der sicherheitsrelevanten E/E/EP-Systeme die genannten Diagnosetests durchgeführt werden.

In einer Weiterentwicklung, bei dem für die Durchführung des Verfahrens ebenfalls mehrere sicherheitsrelevante E/E/PE-Systeme verwendet werden, ist vorgesehen, dass zumindest ein Zuverlässigkeitswert des mindestens einen Zuverlässigkeitswerts der Daten in Abhängigkeit von dem Wert der Metrik ($M_{SPF,RF}$)

$$M_{SPF,RF} = 1 - \frac{\sum\limits_{safety\text{-}related\ HW\ elements} (\lambda_{SPF} + \lambda_{RF})}{\sum\limits_{safety\text{-}related\ HW\ elements} \lambda}$$

ermittelt wird. Die Summe wird über mehrere, vorzugsweise alle, sicherheitsrelevanten E/E/PE-Systeme des Gesamtsystems, die also bei der Durchführung des Verfahrens verwendet werden, ausgeführt. Die Abkürzung "safety-related HW elements" steht hier und im Folgenden für sicherheitsrelevante E/E/EP-Systeme. Diese Metrik entspricht der in Norm ISO 26262, Kapitel 5, Annex C, Abschnitt C.2 definierten "Single-point fault metric". Die Metrik $M_{SPF,RF}$ ist auch dann aussagekräftig, wenn nicht in jedem der sicherheitsrelevanten E/E/EP-Systeme die genannten Diagnosetests durchgeführt werden oder wenn keine Diagnosetests durchgeführt werden, die das Gesamtsystem übergreifen.

In einer Ausführungsform des Verfahrens (und entsprechend auch des Gesamtsystems) ist vorgesehen, dass, falls die für das Durchführen der Sicherheitsfunktion erforderlichen Daten nicht vollständig vorhanden oder nicht hinreichend zuverlässig sind, die Daten nach einer vorgegebenen Wartezeitspanne erneut auf die Steuereinheit übertragen werden, wobei die Daten auf diese Weise so oft wiederholt auf die Steuereinheit übertragen werden, bis die Daten vollständig vorhanden und hinreichend zuverlässig sind. Dies ist eine Möglichkeit, wie beispielsweise zeitliche wiederholte Informationen genutzt werden können. Beispielsweise kann im Fall, dass ein Hindernis vor dem Fahrzeug zuerst mit einer Güte von z. B. 10 % der maximalen Gesamtgüte des Sensors erfasst wird und später mit einer Güte von 50 % bestätigt wird, bei Beachtung der Zuverlässigkeitsgesetze für solche redundanten Informationen eine Gesamtzuverlässigkeit je nach Grundzuverlässigkeit von über 90 % erreicht werden.

In einer Weiterentwicklung ist vorgesehen, dass die Metadaten bereits während eines Startvorgangs des Fahrzeugs, insbesondere vor einem Fahrtbeginn, auf die Steuereinheit übertragen werden, wobei zumindest ein Zuverlässigkeitswert des mindestens einen Zuverlässigkeitswerts der Daten in Abhängigkeit von dem Wert des Diagnosedeckungsgrads ($DC_{MPF,L}$)

$$DC_{MPF,L} = \left(1 - \frac{\lambda_{MPF,L}}{\lambda}\right) \times 100$$

mindestens eines der sicherheitsrelevanten E/E/PE-Systeme des Gesamtsystems ermittelt wird, wobei die Sicherheitsfunktion nur unter der zusätzlichen Bedingung durchgeführt wird, dass dieser während des Startvorgangs ermittelte Zuverlässigkeitswert oberhalb eines vorgegebenen Schwellwertes liegt. Dieser Diagnosedeckungsgrad entspricht der in ISO 26262, Kapitel 5, Annex C, in Gleichung C.4 definierten Größen $K_{DC, MPF, L}$. Auf diese Weise wird denjenigen Risiken Rechnung getragen, die von bereits bestehenden aber unerkannten Störungen bzw. Fehlern ausgehen, die erst in Kombination mit anderen Störungen oder Fehlern die Sicherheitsfunktion beeinträchtigen. Der Diagnosedeckungsgrads $DC_{MPF,L}$ ist somit ein besonders aussagekräftiges Maß für die Zuverlässigkeit des Gesamtsystems (und somit auch für die Daten) bezüglich latenter Fehler, siehe obige Definition dieser Fehlerart. Auch hier ist die oben für $DC_{RF}$ beschriebene Produktbildung möglich, wobei die entsprechenden Voraussetzungen erfüllt sein müssen.

In einer Weiterentwicklung ist vorgesehen, dass die Metadaten bereits während eines Startvorgangs des Fahrzeugs, insbesondere vor einem Fahrtbeginn, auf die Steuereinheit übertragen werden, wobei zumindest ein Zuverlässigkeitswert des mindestens einen Zuverlässigkeitswerts der Daten in Abhängigkeit von dem Wert der Metrik ($M_{MPF,L}$)

$$M_{MPF,L} = 1 - \frac{\sum\limits_{\text{safety-related HW elements}} (\lambda_{MPF,L})}{\sum\limits_{\text{safety-related HW elements}} (\lambda - \lambda_{SPF} - \lambda_{RF})}$$

ermittelt wird, wobei die Summe über mehrere, vorzugsweise über alle, sicherheitsrelevanten E/E/PE-Systeme des Gesamtsystems ausgeführt wird, wobei die Sicherheitsfunktion nur unter der zusätzlichen Bedingung durchgeführt wird, dass dieser Zuverlässigkeitswert oberhalb eines vorgegebenen Schwellwertes liegt. Diese Metrik entspricht der in Norm ISO 26262, Kapitel 5, Annex C, Abschnitt C.3 definierten "Latent fault metric". Auch auf diese Weise wird denjenigen Risiken Rechnung getragen, die von bereits bestehenden aber unerkannten Störungen bzw. Fehlern ausgehen, die erst in Kombination mit anderen Störungen oder Fehlern die Sicherheitsfunktion beeinträchtigen. Die Metrik $M_{MPF,L}$ ist auch dann ein zuverlässiges Maß für die Zuverlässigkeit der Daten, wenn die Diagnosetests nicht das Gesamtsystem übergreifen und beispielsweise nur für manche der sicherheitsrelevanten E/E/PE-Systeme des Gesamtsystems abdecken.

In einer Ausführungsform des Verfahrens bzw. des Gesamtsystems ist vorgesehen, dass die Funktionseinheit eine aktive oder passive Schutzeinrichtung des Fahrzeugs ist. Beispielsweise kann vorgesehen sein, dass

- die Funktionseinheit ein elektronisches Bremsensystem und die Sicherheitsfunktion eine automatische Bremskraftverstärkung ist und/oder dass
- die Funktionseinheit ein Notbremsassistent und die Sicherheitsfunktion eine automatisch ausgelöste Voll- oder Teilbremsung des Fahrzeugs ist und/oder dass
- die Funktionseinheit ein Ausweichassistent und die Sicherheitsfunktion ein automatisches Umfahren eines Hindernisses ist und/oder dass
- die Funktionseinheit eine ESC-Einheit und die Sicherheitsfunktion ein automatisches Stabilisieren des Fahrzeugs, insbesondere durch eine Abbremsen eines oder mehrerer Räder des Fahrzeugs und/oder durch ein Drosseln einer Motorleistung des Fahrzeugs, ist und/oder dass
- die Funktionseinheit ein Airbag-System und die Sicherheitsfunktion ein Auslösen des Airbags ist.

Bei dem Gesamtsystem kann es sich aber auch um ein mit einer elektrischen Ladeeinrichtung verbundenes Fahrzeug handeln, wobei eine Kommunikation und Datenübertragung zwischen der Ladeeinrichtung und der Fahrzeug besteht. Hier kann beispielsweise als Sicherheitsfunktion vorgesehen sein, dass vor eine Überladung der Batterie der Ladestrom die Ladeeinrichtung abgeschaltet wird oder der Ladevorgang beendet wird.

Im Folgenden werden das hier vorgeschlagene Verfahren und das hier vorgeschlagene Gesamtsystem in den Figuren 1 bis 5 schematisch dargestellten speziellen Ausführungsformen näher erläutert. Es zeigt also:

Figur 1    ein Gesamtsystem hier vorgeschlagener Art zum Durchführen einer Sicherheitsfunktion eines Fahrzeugs

Figur 2    ein Beispiel für ein Prinzipblockschaltbild des Systems

Figur 3    ein Bussystem für die Übertragung "sicherheitsrelevanter Nachrichten"

Figur 4    Systemblockdiagramm

Figur 5    Phasen der Fahrzeugführerschaft (Primary Control)

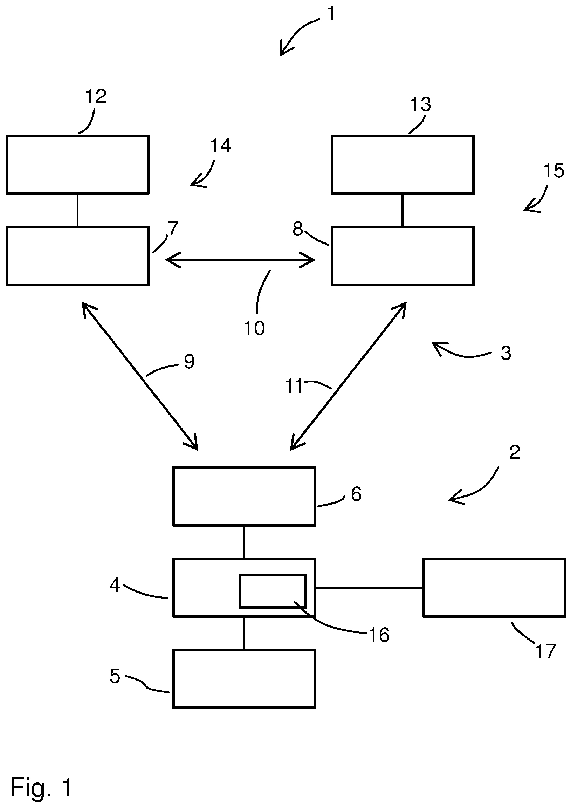

Figur 1 zeigt ein Gesamtsystem 1 hier vorgeschlagener Art, das zum Durchführen eines speziellen Beispiels des hier vorgeschlagenen Verfahrens zum Durchführen einer Sicherheitsfunktion eines ersten Fahrzeugs 2. Das Gesamtsystem umfasst das erste Fahrzeug 2 und ein Kommunikationssystem 3, das eingerichtet ist, Daten, die für das Durchführen der Sicherheitsfunktion erforderlich sind, auf eine Steuereinheit 4 des Fahrzeugs 2 zu übertragen. Die Steuereinheit 4 ist eingerichtet, in Abhängigkeit von den übertragenen Daten Steuersignale zu erzeugen und auf eine Funktionseinheit 5 des Fahrzeugs 2 zu übertragen. Die Funktionseinheit 5 ist eingerichtet, die Sicherheitsfunktion in Abhängigkeit von den Steuersignalen auszuführen.

Bei der Funktionseinheit 5 handelt es sich ein elektronisches Bremsensystem des Fahrzeugs 2 in der Form eines Notbremsassistenten und bei der Sicherheitsfunktion um eine automatisch ausgelöste Voll- oder Teilbremsung des Fahrzeugs 2. Genauso gut könnte aber auch vorgesehen sein, dass die Funktionseinheit ein Ausweichassistent und die Sicherheitsfunktion ein automatisches Umfahren eines Hindernisses ist und/oder dass die Funktionseinheit eine ESC-Einheit und die Sicherheitsfunktion ein automatisches Stabilisieren des Fahrzeugs, insbesondere durch eine Abbremsen eines oder mehrerer Räder des Fahrzeugs und/oder durch ein Drosseln einer Motorleistung des Fahrzeugs, ist und/oder dass die Funktionseinheit ein Airbag-System und die Sicherheitsfunktion ein Auslösen des Airbags ist.

Das Gesamtsystem 1 ist außerdem eingerichtet, in zeitlichen Abständen wiederholt Diagnosetests zur Überprüfung durchzuführen, ob in einem oder in mehreren elektrischen, elektronischen und/oder programmierbaren Systemen, also in einem der sicherheitsrelevanten E/E/PE-Systeme des Gesamtsystems 1 eine Störung besteht bzw. ein Fehler aufgetreten ist, die oder die die Durchführung der Sicherheitsfunktion beeinträchtigen kann. In diesem Beispiel ist vorgesehen, dass mittels der E/E/PE-Systeme des Gesamtsystems 1 selbst automatisch durchgeführt werden (Selbsttests dieser Systeme). Es wäre aber möglich, dass entsprechend eingerichtete Diagnosesysteme zur Durchführung der Diagnosetests verwendet werden. Zu den der sicherheitsrelevanten E/E/PE-Systemen gehören insbesondere die Steuereinheit 4, die Funktionseinheit 5 und das Kommunikationssystem 3, welches in diesem Beispiel eine erste Kommunikationseinheit 6 der Steuereinheit 4 sowie eine zweite Kommunikationseinheit 7 und eine dritte Kommunikationseinheit 8 umfasst. Die Kommunikationseinheiten 6, 7, 8 sind zur gegenseitigen drahtlosen Übertragung von Daten über die mobilfunkbasierten Kommunikationskanäle 9, 10 und 11 (wie etwa UMTS, LTE, GPS, GPRS oder EDGE) eingerichtet. Alternativ wären natürlich auch die Verwendung anderer Kommunikationseinheiten und -kanäle denkbar (beispielsweise eines WLAN-Systems).

Bei den für die Durchführung der Sicherheitsfunktion erforderlichen Daten handelt es sich in diesem Beispiel um Messdaten bzw. Messsignalen einer ersten und einer zweiten Messeinheit 12, 13 des Gesamtsystems 1. Die Messeinheiten 12, 13 sind in diesem Beispiel jeweils in einem zweiten bzw. dritten Fahrzeug 14, 15 integriert, könnten aber auch in einer (ortsfesten) Infrastruktur integriert sein. Die Fahrzeuge 14, 15 sind somit ebenfalls Teile des Gesamtsystems 1. Die Daten werden also per car2car-Kommunikation (C2C) übertragen, könnten aber auch im Fall der genannten Infrastruktur per car2infrastructure-Kommunikation (C2X) übertragen werden. Die Daten können auch über eine Kette bestehend aus dem zweiten und dem dritten Fahrzeug 14, 15 auf das erste Fahrzeug 2 übertragen werden.

Das Kommunikationssystem 3 ist außerdem eingerichtet, zusätzlich zu den Daten Metadaten der Daten auf die Steuereinheit 4 zu übertragen, wobei die Metadaten Informationen über die folgenden sicherheitskritischen E/E/PE-Systeme des Gesamtsystems 1 beinhalten: die erste Kommunikationseinheit 6, die zweite Kommunikationseinheit 7, die dritte Kommunikationseinheit, die Kommunikationskanäle 9, 10, 11, die erste und die zweite Messeinheit 12, 13.

Bei diesen Metadaten handelt es sich für jedes dieser E/E/PE-Systeme jeweils um die Werte der folgenden Fehlerraten, die sich jeweils auf bestimmte Arten von Fehlern, die in dem jeweiligen E/E/PE-System auftreten können beziehen: $I_{SPF}$, $I_{RF}$, $I_{MPF}$, $I_{MPF,L}$, $I_{MPF,D}$, $I_{MPF,P}$, $I_S$ wobei die Fehlerarten wie oben angegeben definiert sind. (Die bereits oben angegebenen Definitionen sollen hier der Übersichtlichkeit halber nicht wiederholt werden.)

Die genannten Metadaten können zusätzlich oder anstelle der Werte dieser Fehlerraten aber auch Werte von Diagnosedeckungsgraden oder Metriken beinhalten, beispielsweise wie die unten angegebenen Diagnosedeckungsgraden und Metriken. Die Metadaten können zusätzlich oder alternativ auch Gerätekennungen eines, mehrere der genannten oder aller der sicherheitsrelevanten E/E/PE-Systeme des Gesamtsystems 1 beinhalten. In letzterem Fall können auf Grundlage dieser Gerätekennungen die zu den jeweiligen E/E/PE-Systemen gehörigen Werte der Fehlerraten, Diagnosedeckungsgrade oder Metriken, beispielsweise mittels der Steuereinheit 4, aus einem Speicher 16 (oder einer Datenbank) ausgelesen und weiterverwendet werden.

Die oben aufgeführten Fehlerraten der Steuereinheit 4 sowie der Funktionseinheit, die ebenfalls sicherheitsrelevanten E/E/PE-Systeme des Gesamtsystems 1 sind, sind in dem Speicher 16 der Steuereinheit 4 gespeichert und werden nicht als Metadaten übertragen.

Die Steuereinheit 4 ist eingerichtet, in Abhängigkeit von diesen Informationen, also in Abhängigkeit von den Fehlerraten, Zuverlässigkeitswerte der Daten zu ermitteln. Da diese Fehlerraten von der Wahrscheinlichkeit für das Auftreten von Störungen oder Fehlern, die die Durchführung der Sicherheitsfunktion beeinträchtigen können, und von der Wahrscheinlichkeit, dass ein Auftreten dieser Störungen oder Fehlern mittels der Diagnosetests und/oder durch einen Fahrer des Fahrzeugs rechtzeitig vor einer Beeinträchtigung der Sicherheitsfunktion erkannt wird, abhängen, hängen auch die Zuverlässigkeitswerte von diesen Wahrscheinlichkeiten ab.

Im Einzelnen werden mittels der Steuereinheit 4 die Werte der Diagnosedeckungsgrade ($DC_{RF}$)

$$DC_{RF} = \left(1 - \frac{\lambda_{RF}}{\lambda}\right) \times 100$$

der ersten Kommunikationseinheit 6, der zweiten Kommunikationseinheit 7, der dritten Kommunikationseinheit 8, der Kommunikationskanäle 9, 10, 11, der ersten und der zweiten Messeinheit 12, 13, sowie der Steuereinheit 4 und der Funktionseinheit 5 berechnet. Anschließend wird einer der Zuverlässigkeitswerte als Produkt der Werte dieser Diagnosedeckungsgrade $DC_{RF}$ zu bestimmen, also als Wert von $DC_{RF,1} \times DC_{RF,2} \times DC_{RF,3} \times ... \times DC_{RF,n}$, wobei n die Anzahl der sicherheitsrelevanten E/E/PE-Systeme des Gesamtsystems 1 ist. Falls die Messdaten beider Messeinheiten 12, 13 gleichzeitig zum Ansteuern der Funktionseinheit verwendet werden, gehen die Diagnosedeckungsgrade beider Messeinheiten 12, 13, sowohl die aller Kommunikationseinheit 6, 7, 8 und die aller Kommunikationskanäle 9, 10, 11 in das Produkt und somit in den Zuverlässigkeitswert ein. Andernfalls geht nur der Diagnosedeckungsgrad diejenige der Messeinheiten in das Produkt und somit in den Zuverlässigkeitswert ein, dessen Messwerte tatsächlich zum Ansteuern der Funktionseinheit verwendet werden, und nur die Diagnosedeckungsgrade derjenigen Kommunikationskanäle und Kommunikationseinheiten, die bei der Übertragung dieser Messwerte tatsächlich beteiligt waren. In diesem Fall ist es beispielsweise möglich, wie weiter unten beschrieben wird, dass die Messwerte derjenigen Messeinheit ausgewählt wird, mit der ein höherer Zuverlässigkeitswert der Daten erzielt werden kann.

Auf entsprechende Weise ist es auch möglich, einen alternativen (oder zusätzlichen) Zuverlässigkeitswert der Daten als Wert der Metrik ($M_{SPF,RF}$)

$$M_{SPF,RF} = 1 - \frac{\sum\limits_{\text{safety-related HW elements}} (\lambda_{\text{SPF}} + \lambda_{\text{RF}})}{\sum\limits_{\text{safety-related HW elements}} \lambda}$$

zu ermitteln.

Mittels der Steuereinheit 4 wird in Abhängigkeit von dem als Produkt der Werte dieser Diagnosedeckungsgrade $DC_{RF}$ gegebenen Zuverlässigkeitswert der Daten geprüft, ob die übertragenen Daten für das Durchführen der Sicherheitsfunktion ausreichend zuverlässig sind, indem der Zuverlässigkeitswert der Daten mit einem vorgegebenen Schwellwert verglichen wird. Die Daten werden dann als hinreichend sicher bewertet, falls der Zuverlässigkeitswert größer (oder alternativ kleiner) als dieser Schwellwert ist. Der Schwellwert ist in Abhängigkeit des Risikopotenzials der Sicherheitsfunktion festgelegt. Je höher das Risikopotenzial der Sicherheitsfunktion ist, umso größer ist der zugehörige vorgegebene Schwellwert gewählt.

Außerdem ist die Steuereinheit eingerichtet sein zu prüfen, ob die für das Durchführen der Sicherheitsfunktion erforderlichen Daten vollständig vorhanden sind.

Falls die Prüfung ergibt, dass die für das Durchführen der Sicherheitsfunktion erforderlichen Daten nicht vollständig vorhanden oder nicht hinreichend zuverlässig sind, ist vorgesehen sein, dass die auf die Steuereinheit 4 übertragenen Daten nicht zum Ansteuern der Funktionseinheit 5 verwendet werden. Außerdem wird in diesem Fall mittels der Steuereinheit 4 ein Deaktivierungssignal an die Funktionseinheit 5 gesendet, wobei die Funktionseinheit 5 nach Empfang dieses Deaktivierungssignals automatisch in einen Sicherheitsmodus übergeht, in dem die Sicherheitsfunktion nicht durchgeführt werden kann. Auf diese Weise wird sichergestellt, dass die Sicherheitsfunktion nur dann durchgeführt werden kann, falls die Prüfung ergibt, dass die hierfür erforderlichen Daten hinreichend sicher und zuverlässig sind. Außerdem wird auf diese Weise das Verfahren für den Fall determiniert, in dem die Daten nicht vollständig vorhanden oder nicht ausreichend zuverlässig sind.

Zusätzlich ist vorgesehen, dass mittels der Steuereinheit 4 ein Signalgeber 17 des ersten Fahrzeugs 2 angesteuert wird, dem Fahrer das Ergebnis der Prüfung zu signalisieren, also ob die für das Durchführen der Sicherheitsfunktion erforderlichen Daten vollständig vorhanden und hinreichend zuverlässig sind oder nicht. Zusätzlich ist vorgesehen, dass, falls die Prüfung ergibt, dass die für das Durchführen der Sicherheitsfunktion erforderlichen Daten nicht vollständig vorhanden oder nicht hinreichend zuverlässig sind, mittels der Steuereinheit 4 der Signalgeber 17 angesteuert wird, dem Fahrer die momentane Nichtverfügbarkeit der Sicherheitsfunktion zu signalisieren.

Aus den übertragenen Daten kann sich insbesondere ergeben, dass momentan kein Anlass für die Durchführung der Sicherheitsfunktion besteht. Auch dies kann dem Fahrer mittels der Signalgebers 17 angezeigt werden, falls diese Daten hinreichend zuverlässig sind. Das bedeutet, dass nicht in jedem Fall, in dem die für die Durchführung der Sicherheitsfunktion erforderlichen Daten vollständig vorhanden und hinreichend zuverlässig sind, die Sicherheitsfunktion auch tatsächlich durchgeführt wird.

Zusätzlich kann vorgesehen sein, dass die Metadaten der Daten bereits während eines Startvorgangs des ersten Fahrzeugs 2 vor einem Fahrtbeginn auf die Steuereinheit 4 übertragen werden. Dies ist natürlich nur dann möglich, wenn während des Startvorgangs bereits eine Übertragung der Daten und der Metadaten möglich ist. Dies lässt sich am leichtesten in solchen Fällen realisieren, in denen die Messeinheiten 12, 13 sowie das Kommunikationssystem 3 im ersten Fahrzeug 2 integriert sind. Dies ist in der Regel dann der Fall, wenn die Funktionseinheit 5 eine ESC-Einheit und die Sicherheitsfunktion ein automatisches Stabilisieren des Fahrzeugs 2 ist, beispielsweise durch eine Abbremsen eines oder mehrerer Räder des Fahrzeugs und/oder durch ein Drosseln einer Motorleistung des Fahrzeugs.

Beim Startvorgang werden diese Systeme aktiviert und übertragen die Metadaten auf die Steuereinheit 4. Anschließend können dann Werte der Diagnosedeckungsgrade ($DC_{MPF,L}$)

$$DC_{MPF,L} = \left(1 - \frac{\lambda_{MPF,L}}{\lambda}\right) \times 100$$

der ersten Kommunikationseinheit 6, der zweiten Kommunikationseinheit 7, der dritten Kommunikationseinheit 8, der Kommunikationskanäle 9, 10, 11, der ersten und der zweiten Messeinheit 12, 13, sowie der Steuereinheit 4 und der Funktionseinheit 5 berechnet werden. Anschließend wird als weitere Zuverlässigkeitswert der Daten das Produkt der Werte dieser Diagnosedeckungsgrade zu bestimmen, also als Wert von $DC_{MPF,L,1}$ x $DC_{MPF,L,2}$ x $DC_{MPF,L,3}$ x ... x $DC_{MPF,L,n}$ Es ist außerdem möglich, dass auf entsprechende Weise ein alternativer (oder zusätzlicher) Zuverlässigkeitswert der Daten als Wert der Metrik ($M_{MPF,L}$)

$$M_{MPF,L} = 1 - \frac{\sum\limits_{\text{safety-related HW elements}} (\lambda_{MPF,L})}{\sum\limits_{\text{safety-related HW elements}} (\lambda - \lambda_{\text{SPF}} - \lambda_{\text{RF}})}$$

ermittelt wird, wobei die Summe vorzugsweise über alle sicherheitsrelevanten E/E/PE-Systeme des Gesamtsystems 1 ausgeführt wird. Die Sicherheitsfunktion wird dann nur unter der zusätzlichen Bedingung durchgeführt wird, dass der aus den $DC_{MPF,L}$ (oder alternativ aus $M_{MPF,L}$) erhaltene Zuverlässigkeitswert oberhalb eines vorgegebenen Schwellwertes liegt.

In diesem Ausführungsbeispiel wird außerdem, falls die für das Durchführen der Sicherheitsfunktion erforderlichen Daten in der Steuereinheit 4 nicht vollständig vorhanden oder nicht hinreichend zuverlässig sind, die Daten nach einer vorgegebenen Wartezeitspanne erneut auf die Steuereinheit 4 übertragen, wobei die Daten auf diese Weise so oft wiederholt auf die Steuereinheit 4 übertragen werden, bis die Daten vollständig vorhanden und hinreichend zuverlässig sind. Auf diese Weise kann im Fall, dass ein Hindernis vor dem Fahrzeug 2 zuerst mit der ersten Messeinheit 12 mit einer Güte von z. B. 10 % der maximalen Gesamtgüte der Messeinheit 12 erfasst wird und später mit einer Güte von 50 % mit der zweiten Messeinheit 13 bestätigt wird, bei Beachtung der Zuverlässigkeitsgesetze für solche redundanten Informationen eine Gesamtzuverlässigkeit je nach Grundzuverlässigkeit von über 90 % erreicht werden. Durch diese gegenseitige Bestätigung der Messdaten der ersten Messeinheit 12 und der Messdaten der zweiten Messeinheit 13 kann auf diese Weise ein resultierender Zuverlässigkeitswert dieser Daten erzielt werden, der ausreichend hoch ist für die Durchführung der Sicherheitsfunktion, obwohl die Messdaten der Messeinheiten 12, 13, jeweils isoliert betrachtet, hierfür nicht ausreichend zuverlässig gewesen wären.

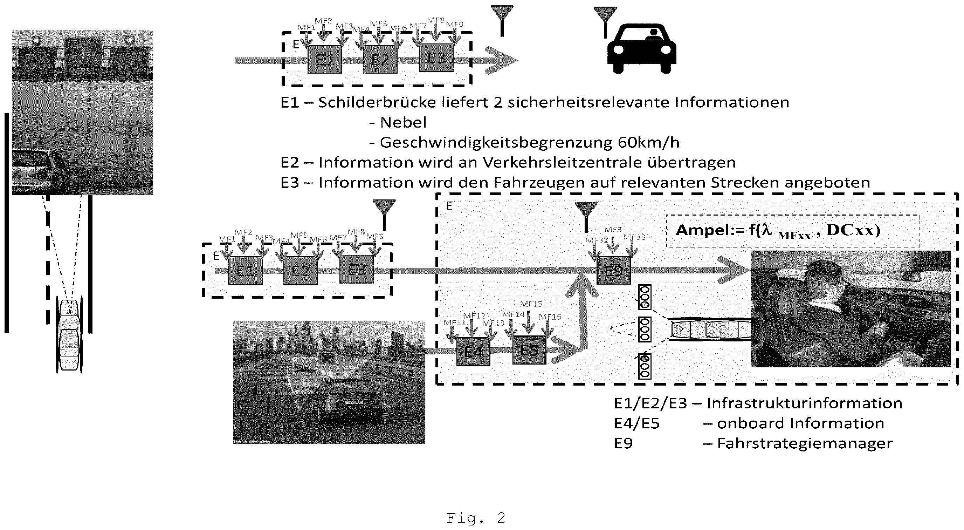

Die in den Figuren 2 bis 5 gezeigten Komponenten ergänzen ein normales Fahrzeug, welches gemäß den gültigen Zulassungsrichtlinien ergänzt werden kann. Sämtliche hier beschriebenen Basissysteme, wie Bremse, Lenkung und so weiter entsprechen üblichen zulassungsfähigen Systemen. Die hier beschriebene Funktion soll ein Fahrzeug im Verkehr selbständig sicher im Verkehr steuern (teil-oder voll automatisierte Systeme) oder den Fahrer im Verkehr unterstützen (im Sinne heutiger Fahrerassistenzsysteme), wobei für die Lenkung der Fahrer weiterhin selbst verantwortlich ist oder durch andere Systeme oder Ergänzungen dieses System gesteuert wird. Somit wird das Fahrzeug von externen Eingriffen nur gebremst oder beschleunigt. In der weiteren Spezifikation wird dies durch die Geschwindigkeitsführung des Fahrzeugs beschrieben, wobei Geschwindigkeitsführung den Bereich von Verzögerungen zum Stillstand und Beschleunigungen bis zu 130km/h bedeutet.

Nach vergleichbaren Prinzipien sind auch Quereingriffe (z. B. Lenken oder einseitige Bremseneingriffe (wie ESC) oder Vertikaleingriffe (dynamische Feder-Dämpfersysteme) ins Fahrzeug möglich, jedoch sind dazu andere Sensoren und Aktuatoren einzubinden.

Der Aufbau des Steuergerätes, welchen das erfindungsgemäße System, den sogenannten Qualifier trägt, sollte gemäß ISO 26262 nach dem maximal angewendeten ASIL erfolgen.

In Figur 2 soll das Prinzipblockschaltbild anhand eines Beispiels erläutert werden. Fahrzeugexterne Informationen kommen in diesem Beispiel von einer Wechselverkehrsschilderbrücke, die mittels ITS-G5 und V2I-Kommunikation übertragen werden können. Fahrzeugintern werden Informationen von der boardeigenen Umfeldsensorik hier in Figur 2 von der Kamera oder sonstiger Fahrzeugsensorik, z.B. aus dem ESC-System, geliefert.

Die relevanten Elemente bestehen aus:

> E1 - eine Schilderbrücke auf einer Autobahn ist mit V2X Kommunikation ausgerüstet und kann 2 sicherheitsrelevante Informationen liefern.

> - zulässige Geschwindigkeitsbegrenzung für den folgenden Streckenabschnitt
> - Hinweise über Wetter- oder verkehrsbedingte Verkehrsbeeinträchtigungen, die das Führen des Fahrzeug durch den Fahrer beeinträchtigen können. (Nebel, Fahrbahnverschmutzung, Stau etc.)

> E2 - Datenübertragungssystem zu einer Verkehrsleitzentrale

> E3 - Datenverarbeitung in der Verkehrsleitzentrale

> E4 - Datenübertragungssystem welches über Mobilfunk die Daten der Verkehrsleitzentrale den Fahrzeugen in relevanten Bereichen zur Verfügung stellt. Im engeren Sinn die Mobilfunkstrecke zur Verkehrszentrale zum jeweiligen Fahrzeug.

> E5 - Kamerasystem, welches eine Objekterkennung für Verkehrszeichen, Fahrsituationserkennung im Fahrzeugvorfeld, Personenerkennung, Fahrbahnmarkierungen etc.

> E6 - Kommunikationssystem zu Fahrzeugzentralsteuergerät

> E9 - Fahrzeugzentralsteuergerät

Weiter verfügt das Fahrzeug über ein Display, welches den Zustand des Safety Qualifiers als symbolische Ampel anzeigen kann.

Das Fahrzeugzentralsteuergerät kann über die Fahrzeugkommunikationsschnittstelle das Motormanagement und das Bremsensteuergerät im Bereich von 0-100% des Stellbereichs der jeweiligen Steuergeräte beeinflussen.

Alle Systeme E1 bis E9 bilden jeweils einen Diagnosequalifier des Einzelsystems, der die Diagnosegüte zu jedem Zeitpunkt der Datenübertragung zur Verfügung stellt.

- $DC_{SPF}$ = 0 - 60 % schwache Diagnose
- $DC_{SPF}$ = 60 - 90 % statische Systemfehler werden beherrscht.
- $DC_{SPF}$ = 90 - 99 % dynamische Systemfehler werden beherrscht

Auslegungsbedingt liefert jedes System E1 bis E9 einen Zuverlässigkeitswert (Fehlerrate in 10E-9FIT (Failure in Time) pro Stunde), der sich aus der Sicherheitsqualifikation des Systems im Entwicklungsprozess zu ermitteln ist, ergeben hat.

Bei Sensoren wird dieser Zuverlässigkeitswert prozentual reduziert um die Güte der Informationsgewinnung bezogen auf die maximale Erkennungsgüte.

Die Qualifier sind für den Fahrer nach folgendem Prinzip als Information auswertbar.

Grün - die gesicherte Information liegt vor, in dem folgenden Streckenabschnitt, wird mit keiner stationären Gefährdung gerechnet.

Gelb - Das System kann keine gesicherte Information bereit stellen, somit ist der Fahrer vollständig für das Führen des Fahrzeugs selbst verantwortlich.

Rot - Es ist eine Gefährdung im folgenden Streckenabschnitt sicher erkannt worden, wenn der Fahrer keine gegenteilige definierte Reaktion (Gas geben oder stärker Bremsen) zeigt, wird das Fahrzeug in einem definierten Zeitfenster herunter gebremst.

Das System ist so definiert, dass der Fahrer eigenverantwortlich in den gesteuerten Bereich, z. B. überwachter Autobahnabschnitt fährt und auch von dem System rechtzeitig darauf hingewiesen wird, dass er die Fahrzeugführung wieder vollständig übernehmen muss.

1. Fahrt mit stationärer Geschwindigkeit. Geschwindigkeit wird über externe Systeme (hier der Verkehrsleitzentrale) vorgegeben.

2. Fahrzeug wird bis auf maximal 130 km/h von der Verkehrsleitzentrale beschleunigt, wenn diese gesicherte Informationen für den folgenden Streckenabschnitt verfügbar hat.

3. Fahrzeug wird bis maximal zum Stillstand von der Verkehrsleitzentrale herunter gebremst, je nachdem welche Informationen der Verkehrsleitzentrale zur Verfügung stehen.

4. Während der Fahrzeugführung durch die Verkehrsleitzentrale dienen die Fahrzeug-interne Vorfeldsensorik nur der Beobachtung des Verkehrsraums. Wird von der Vorfeldsensorik ein unerwartetes Ereignis (Ladung fällt von vorrausfahrenden Fahrzeug), Objekt (Personen oder Tiere auf der Fahrbahn) beziehungsweise bauliche (Fahrbahn defekt) oder positionsbezogene (Fahrzeug verlässt Fahrbahn) Unplausibilitäten erkannt, so kann die Geschwindigkeitsführung auch bei gesicherten Informationen durch von der Vorfeldsensorik übernommen werden. Der Fahrer kann durch stärkeres Bremsen oder Gas geben, sämtliche externen und internen Systeme zur Geschwindigkeitsführung aktiv übernehmen.

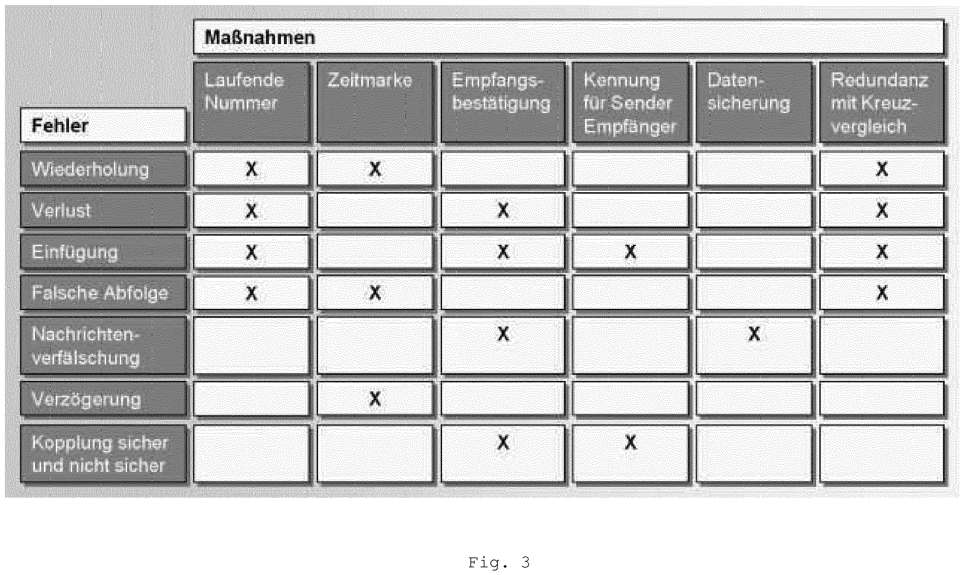

In Figur 3 wird ein Bussystem für die Übertragung von sicherheitsrelevanten Nachrichten konzeptionell dargestellt. Sämtliche Diagosequalifier müssen während der Systementwicklung definiert werden. Für alle Kommunikationssysteme sollten folgende Maßnahmen implementiert werden. Somit sind die Standardfehlerbilder, die zu diagnostizieren sind für drahtgebundene oder nicht-drahtgebundene Kommunikation zugänglich.

Basierend auf einer Analyse der Datensicherheit für die Fahrzeuginternen Bussysteme müssen weitere Maßnahmen zur Datenintegrität (Security-Maßnahmen) definiert werden. Sind die bereits definierten Maßnahmen oben nicht ausreichend wie bei den externen Daten aus der Verkehrsleitzentrale, so sind ergänzende Security-Qualifier oder Sendersignaturen in die Bildung des Diagnosedeckungsqualifier einzubinden. Das heißt der Diagnosedeckungqualifier kann nur gebildet werden, wenn die Kommunikationssysteme der notwendigen Maßnahmen zur Datensicherheit auch aktuell aktiv sind.

Eine Erläuterung hierzu: Wenn man Daten plausibilisieren muß bevor man eine Aktion einleitet, wie z. B. lenken, bremsen, dann ist eine absichtliche Datenmanipulation schwierig, weil über zwei unabhängige Wege die Daten so manipuliert werden müssen, dass der Effekt gleichzeitig in der Plausibilitätsprüfung wirkt.

Sobald dies nur zeitversetzt wirkt, kann der Qualifier dies entdecken.

Ein besonderer Vorteil des Systems ist es, dass nur noch das System, welches den Qualifier trägt, über sicherheitsrelevante Degradationen entscheidet, und somit können die Abschaltpfade in den anderen beteiligten Systemen deaktiviert oder gar entfernt werden. Heute schalten sich die unterlagerten Systeme auf Basis ihrer eigenen Diagnose ab. Durch die Abschaltung oder einfach sicherheitstechnische Ignorierung der Information würde die Verfügbarkeit des Gesamtsystems steigen. Auch selbstheilende Systeme können so, je nach Zustand, ohne Werkstattaufenthalt wieder für sicherheitstechnische Funktionen aktiviert werden.

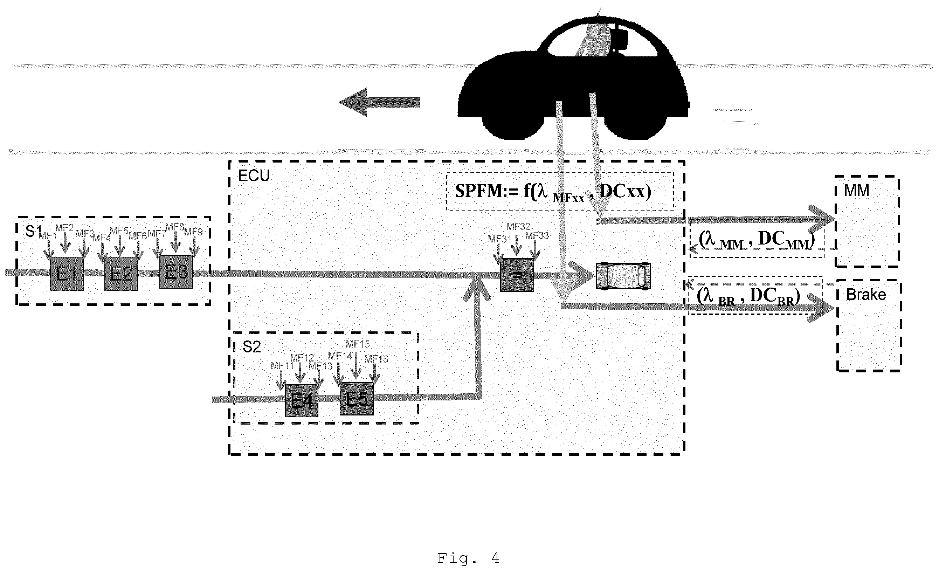

In Figur 4 wird ein Systemblockdiagramm dargestellt. Die Funktionen des Steuergerätes (ECU) umfassen beispielsweise

- Aufnahme der internen und externen Sensorsignale inklusive ihrer Qualifier-Daten (spezifischer Zuverlässigkeitsdaten, Signalgüte und Diagnosedaten).

- Aufnahme des Fahrerwunschs (inklusive der relevanten Diagnosedaten der involvierten Systeme oder Komponenten)

- Ansteuern der Aktuatoren (MM, Motormanagement und BR, Bremsen) über einen definierten Fernsteuereingang der jeweiligen Aktuatoren.

- Bilden des Qualifier und Überwachen und Initiieren des Wechsels der Primary Control (Fahrzeugführung)

- Eintrag des Qualifierstatus in einen Sequenz- und Event-Recorder bei jeder Anforderung oder Übergabe der Primary Control.

Externe Systeme oder Komponenten müssen folgende Daten- oder Informationen zusätzlich zu ihren Perfomanzdaten liefern:

- Quantifizierte Güte der sicherheitsrelevanten Performanzinformation (Wie gut ist die Erkennung des Sensors (z. B. als Prozentwert seiner Maximalperformanz)).
- Die System- oder Komponenten- spezifische Zuverlässigkeit (Fehlerrate) auf Basis der Sicherheitsqualifikation während der Entwicklung). Alternativ kann diese Information im Zentralsteuergerät (ECU) hinterlegt werden. Aus Gründen der Datenintegrität kann auch diese Information verschlüsselt werden, so dass besonders Manipulationen der externen Daten vermieden werden kann.
- Den aktuellen Diagnosestatus, wobei der Wert digital sein kann (Diagnose aktiv oder positiv etc.) oder auch als Wert der Diagnosedeckung übertragen wird. Auch der Grad der Diagnosedeckung basiert auf den Daten der Sicherheitsqualifikation während der Produktentwicklung. Auch aus Gründen der Datensicherheit können diese Daten verschlüsselt oder signiert übermittelt werden, sodass externe Manipulationen auszuschließen sind.

Die Daten zur Signalgüte, Zuverlässigkeit und Diagnosedeckung können einzeln oder im Block verschlüsselt oder signiert werden. Je nach Grad der Beeinflussung können 1 bis 3 Datensätze gekapselt werden, so dass eine Mehrfachbeeinflussung stattfinden muss. Mehrfachdatenbeeinflussung von Daten, die an verschiedenen Orten gespeichert und/oder überprüft werden, wird die beabsichtigte oder unbeabsichtigte Manipulation der Daten sehr schwierig. Durch die Kapselung kann der Safety-Qualifier manipulierte oder verfälschte Daten abweisen und wird immer eine sichere Systementscheidung einleiten können.

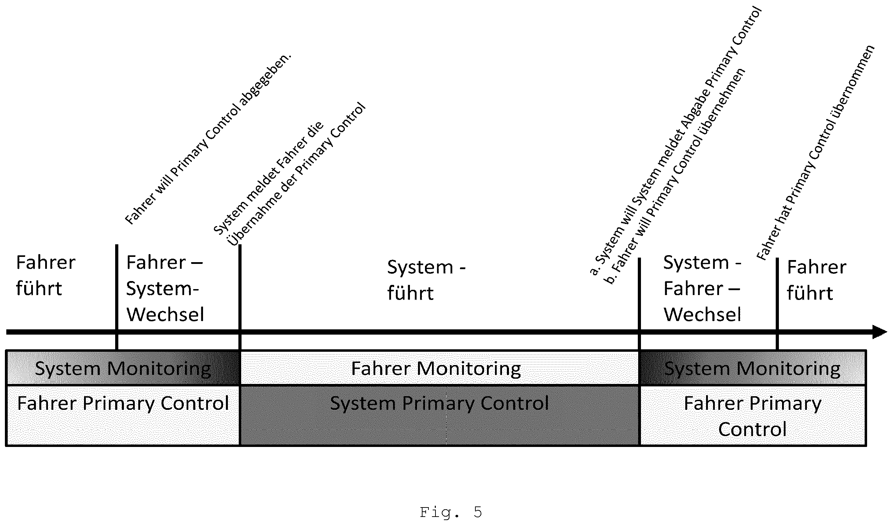

In Fig. 5 werden die Phasen der Fahrzeugführerschaft (Primary Control) dargestellt.

Bei jeder automatisierten Funktion im Fahrzeug muss das System eindeutig die Fahrzeugführerschaft (Primary Control) übernehmen.

Dazu werden folgende Phasen betrachtet:

- Fahrer führt eigenverantwortlich das Fahrzeug; Assistenzsysteme unterstützen ihn dabei, übernehmen jedoch nie die Hoheit über das Fahrzeug.
- Fahrer-System-Wechsel, der Fahrer will die Führerschaft des Fahrzeugs eindeutig abgeben und das System ist bereit die Führerschaft auch aufzunehmen.

- System führt, das System führt das Fahrzeug, der Fahrer beobachtet das System bedingt.
- System-Fahrer-Wechsel, das System gibt die Führerschaft ab und der Fahrer übernimmt die Führerschaft von dem System. Hierbei kann es sein, dass der Fahrer die Führerschaft direkt übernimmt oder auf Anforderung des Systems.

In der Phase "Fahrer führt" führt der Fahrer eigenverantwortlich das System. Das System ist im Standby-Modus und meldet dem Fahrer bei hinreichenden Diagnosen die Bereitschaft, die Führerschaft zu übernehmen.

In der Phase "Fahrer-System-Wechsel" gibt der Fahrer dem System nachvollziehbar bekannt, dass er die Primary Control an das System abgeben möchte. Er hat sich vergewissert, dass er in einer Fahrsituation ist, in der dies erlaubt und es auch keine weiteren Gefährdungen für die Systemführung gegeben sind. Das System initialisiert alle relevanten Systeme, um die Führerschaft zu übernehmen und leitet die entsprechenden Funktionen ein. Wenn das System die vollständige Primary Control übernommen hat, dann meldet das System diese Information an den Fahrer.

In der Phase "System führt" hat das System die Primary Control für die definierte Funktion. Der Fahrer muss das Fahrzeug, die Fahrsituation und das System beobachten, damit er jederzeit in einem hinreichenden Intervall die Systemführerschaft zurücknehmen kann.

In der Phase "System-Fahrer-Wechsel" kann das System die Absicht melden, dass es die Primary Control abgeben will, oder der Fahrer nimmt dem System die Primary Control weg.

Hier wird nochmal unterteilt in die Phase "System will Primary Control abgeben" und in die Phase "Fahrer nimmt dem System die Primary Control weg".

In der Phase "System will Primary Control abgeben" erkennt das System in sicherer Entfernung, dass es die Primary Control nicht mehr sicher gewährleisten kann, z. B. Autobahnende). Das System ist so ausgelegt, dass diese Meldung hinreichend rechtzeitig (z. B. Warnzeit 30s) an den Fahrer gemeldet wird. Das Szenario muss entsprechend umgesetzt werden, wenn die Diagnose des Systems einen Fehler entdeckt, der die Sicherheit der Primary Control nicht mehr gewährleisten kann. Wird diese Warnzeit z. B. auf 30 Sekunden definiert, dann muß das System so ausgelegt sein, dass es für diese Warnzeit auch die Systemführerschaft sicher aufrecht erhalten kann. Dies kann durch ein entsprechendes fehlertolerantes Design des Systems gewährleistet sein.

Um die Phase "Fahrer nimmt dem System die Primary Control weg" auszuführen, ist das System so ausgelegt, dass der Fahrer jederzeit die Führerschaft intuitiv die Primary Control übernehmen kann. Das System muss umgehend in den Monitoring-Modus wechseln, wenn der Fahrer die Primary Control eindeutig übernommen hat.

Das System erkennt in sicherer Entfernung, dass es die Primary Control nicht mehr sicher gewährleisten kann (z. B. Autobahnende). Das System ist so aus gelegt, dass diese Meldung hinreichend rechtzeitig, z. B. Warnzeit 30s an den Fahrer gemeldet wird. Das Szenario muss entsprechend umgesetzt werden, wenn die Diagnose des Systems einen Fehler entdeckt, der die Sicherheit der Primary Control nicht mehr gewährleisten kann. Wird diese Warnzeit z. B. auf 30 Sekunden definiert, dann muß das System so ausgelegt sein, dass es für diese Warnzeit auch die Systemführerschaft sicher aufrecht erhalten kann. Dies kann durch ein entsprechendes fehlertolerantes Design des Systems gewährleistet sein.

Das System hat die Primary Control für die definierte Funktion. Der Fahrer muss das Fahrzeug, die Fahrsituation und das System beobachten, damit er jederzeit in einem hinreichenden Intervall die Systemführerschaft zurücknehmen kann. Somit fungiert der Safety Qualifier als archivierte Online-Dokumentation, und dokumentiert den Wechsel der Primary Control.

Bezugszeichenliste

1.  Gesamtsystem
2.  erstes Fahrzeug
3.  Kommunikationssystem
4.  Steuereinheit (ECU)
5.  Funktionseinheit
6.  erste Kommunikationseinheit
7.  zweite Kommunikationseinheit
8.  dritte Kommunikationseinheit
9.  Kommunikationskanal
10. Kommunikationskanal
11. Kommunikationskanal
12. erste Messeinheit
13. zweite Messeinheit
14. zweites Fahrzeug
15. drittes Fahrzeug
16. Speicher
17. Signalgeber

DC    Diagnoseabdeckungsgrad
SPFM  Einzelfehlermetrik (Single-Point-Failure-Metric)
LFM   latente Fehlermetrik (Latent-Failure-Metric)
PMHF  Fehlerrate für Top-Event (Probabilistik-Metrik for radom Hardware Failure)
ASIL  Automotive Safety Integrity Level

**Patentansprüche**

1.  Verfahren zum Durchführen einer Sicherheitsfunktion eines Fahrzeugs (2), bei dem mittels mindestens eines Kommunikationssystems (3) Daten, die für das Durchführen der Sicherheitsfunktion erforderlich sind, auf eine Steuereinheit (4) des Fahrzeugs (2) übertragen werden, wobei mittels der Steuereinheit (4) in Abhängigkeit von den übertragenen Daten Steuersignale erzeugt und auf eine Funktionseinheit (5) des Fahrzeugs (2) übertragen werden, wobei mittels der Funktionseinheit (5) die Sicherheitsfunktion in Abhängigkeit von den Steuersignalen durchgeführt wird, wobei Diagnosetests in zeitlichen Abständen wiederholt durchgeführt werden, wobei mit den Diagnosetests überprüft wird, ob in einem oder in mehreren zum Durchführen des Verfahrens verwendeten elektrischen, elektronischen und/oder programmierbaren Systemen (3- 13) ein Fehler oder eine Störung besteht, die die Durchführung der Sichernheitsfunktion beeinträchtigen kann, **dadurch gekennzeichnet, dass** mittels des Kommunikationssystems (3) Metadaten der Daten auf die Steuereinheit (4) übertragen werden, wobei die Metadaten Informationen über die zum Durchführen des Verfahrens verwendeten Systeme beinhalten, wobei mittels der Steuereinheit (4) unter Verwendung dieser Informationen mindestens ein Zuverlässigkeitswert der Daten ermittelt wird, der

- von der Wahrscheinlichkeit für das Auftreten von Fehlern oder Störungen, die die Durchführung der Sicherheitsfunktion beeinträchtigen können und
- von der Wahrscheinlichkeit, dass ein Auftreten dieser Fehler oder Störungen mittels der Diagnosetests und/oder durch einen Fahrer des Fahrzeugs (2) rechtzeitig vor einer Beeinträchtigung der Sicherheitsfunktion erkannt wird,

abhängig ist, wobei mittels der Steuereinheit (4) in Abhängigkeit von dem mindestens einen Zuverlässigkeitswert geprüft wird, ob die übertragenen Daten für das Durchführen der Sicherheitsfunktion zuverlässig sind.

2.  Verfahren aus Anspruch 1, **dadurch gekennzeichnet, dass**, falls die für das Durchführen der Sicherheitsfunktion erforderlichen Daten nicht vollständig vorhanden oder nicht zuverlässig sind,

- die auf die Steuereinheit (4) übertragenen Daten nicht zum Ansteuern der Funktionseinheit (5) verwendet werden und/oder
- mittels der Steuereinheit (4) ein Deaktivierungssignal an die Funktionseinheit (5) gesendet wird, wobei die Funktionseinheit nach Empfang dieses Deaktivierungssignals automatisch in einen Sicherheitsmodus übergeht, in dem die Sicherheitsfunktion nicht durchgeführt werden kann und/oder
- die Daten nach einer vorgegebenen Wartezeitspanne erneut auf die Steuereinheit (4) übertragen werden, wobei die Daten auf diese Weise so oft auf die Steuereinheit (4) übertragen werden, bis die Daten vollständig vorhanden und zuverlässig sind.

3. Verfahren aus einem der vorangehenden Ansprüche, **dadurch gekennzeichnet , dass** mittels der Steuereinheit (4) ein Signalgeber des Fahrzeugs (2) angesteuert wird, dem Fahrer zu signalisieren, ob die für das Durchführen der Sicherheitsfunktion erforderlichen Daten vollständig vorhanden und zuverlässig sind.

4. Verfahren aus einem der vorangehenden Ansprüche, **dadurch gekennzeichnet , dass**, falls die für das Durchführen der Sicherheitsfunktion erforderlichen Daten nicht vollständig vorhanden oder nicht zuverlässig sind, mittels der Steuereinheit (4) der Signalgeber (17) angesteuert wird, dem Fahrer die momentane Nichtverfügbarkeit der Sicherheitsfunktion zu signalisieren.

5. Verfahren aus einem der vorausgehenden Ansprüche, **dadurch gekennzeichnet, dass** die Daten in Abhängigkeit von Messsignalen mindestens einer Messeinheit (12, 13) erstellt werden.

6. Verfahren aus einem der vorangehenden Ansprüche, **dadurch gekennzeichnet, dass** der mindestens eine Zuverlässigkeitswert in Abhängigkeit von mindestens einer der Fehlerraten $I_{SPF}$, $I_{RF}$, $I_{MPF}$, $I_{MPF,L}$, $I_{MPF,P}$, $I_{MPF,D}$ ermittelt wird, wobei jede diese Fehlerraten die mittlere Anzahl von Fehlern, die innerhalb einer Zeiteinheit in einem bei der Durchführung des Verfahrens verwendeten elektrischen, elektronischen und/oder programmierbaren System (3-13) auftreten, wobei sich die jeweiligen Fehlerraten jeweils ausschließlich auf folgende Arten von Fehlern beziehen:

$I_{SPF}$: Fehler, die sogar dann, wenn sie alleine auftreten, die die Durchführung der Sicherheitsfunktion beeinträchtigen können, und deren Auftreten nicht durch die Diagnosetests überprüft werden und somit durch die Diagnosetests auch nicht rechtzeitig vor einer Beeinträchtigung der Sicherheitsfunktion festgestellt werden können;

$I_{RF}$: Fehler, die sogar dann, wenn sie alleine auftreten, die Durchführung der Sicherheitsfunktion beeinträchtigen können, und deren Auftreten zwar durch die Diagnosetests überprüft werden aber dennoch durch die Diagnosetests nicht rechtzeitig vor einer Beeinträchtigung der Sicherheitsfunktion festgestellt werden;

$I_{MPF,L}$: Fehler, die, wenn sie gleichzeitig mit anderen Fehlern auftreten oder vorliegen, die Durchführung der Sicherheitsfunktion beeinträchtigen können, und deren Auftreten nicht durch die Diagnosetests überprüft werden;

$I_{MPF,D}$: Fehler, die, wenn sie gleichzeitig mit anderen Fehlern auftreten oder vorliegen, die Durchführung der Sicherheitsfunktion beeinträchtigen können und deren Auftreten durch die Diagnosetests überprüft und rechtzeitig vor einer Beeinträchtigung der Sicherheitsfunktion festgestellt werden;

$I_{MPF,P}$: Fehler, die, wenn sie gleichzeitig mit anderen Fehlern auftreten oder vorliegen, die Durchführung der Sicherheitsfunktion beeinträchtigen können, und deren Auftreten durch den Fahrer des Fahrzeugs (2) rechtzeitig festgestellt werden.

7. Verfahren aus Anspruch 6, **dadurch gekennzeichnet, dass** zumindest ein Zuverlässigkeitswert des mindestens einen Zuverlässigkeitswerts der Daten in Abhängigkeit von zumindest einem Wert eines Diagnosedeckungsgrades $D_{CRF}$ nach der Norm ISO 26262

$$DC_{RF} = \left(1 - \frac{\lambda_{RF}}{\lambda}\right) \times 100$$

mindestens eines der zum Durchführen des Verfahrens verwendeten elektrischen, elektronischen und/oder programmierbaren Systeme ermittelt wird, wobei I für dieses System (3-13) durch $I_{SPF}$ + $I_{RF}$ + $I_{MPF,L}$ + $I_{MPF,D}$ + $I_{MPF,P}$ gegeben ist und $I_S$ die Fehlerrate für das Auftreten eines beliebigen Fehlers in diesem System (3 - 13) ist.

8. Verfahren aus einem der Ansprüche 6 oder 7, **dadurch gekennzeichnet, dass** zumindest ein Zuverlässigkeitswert des mindestens einen Zuverlässigkeitswerts der Daten in Abhängigkeit von dem Wert der Metrik $M_{SPF, RF}$ nach der Norm ISO 26262

$$M_{SPF,RF} = 1 - \frac{\sum\limits_{\text{safety-related HW elements}} (\lambda_{SPF} + \lambda_{RF})}{\sum\limits_{\text{safety-related HW elements}} \lambda}$$

ermittelt wird, wobei die Summe über mehrere während des Verfahrens verwendete elektrische, elektronische und programmierbare Systeme (3-13) ausgeführt wird, in denen Störungen auftreten können, die alleine oder in Kombination miteinander die Durchführung der Sicherheitsfunktion beeinträchtigen können wobei 1 für dieses System (3-13) durch $I_{SPF}$ + $I_{RF}$ + $I_{MPF,L}$ + $I_{MPF,D}$ + $I_{MPF,P}$ gegeben ist und $I_S$ die Fehlerrate für das Auftreten eines beliebigen Fehlers in diesem System (3 - 13) ist.

9. Verfahren nach einem der Ansprüche 6 bis 8, **da-**

**durch gekennzeichnet, dass** die Metadaten bereits während eines Startvorgangs des Fahrzeugs (2), insbesondere vor einem Fahrtbeginn, auf die Steuereinheit (4) übertragen werden, wobei zumindest ein Zuverlässigkeitswert des mindestens einen Zuverlässigkeitswerts der Daten in Abhängigkeit von dem Wert des Diagnosedeckungsgrads DC$_{MPF,L}$ nach der Norm ISO 26262

$$DC_{MPF,L} = \left(1 - \frac{\lambda_{MPF,L}}{\lambda}\right) \times 100$$

mindestens eines der zum Durchführen des Verfahrens verwendeten elektrischen, elektronischen und/oder programmierbaren Systeme ermittelt wird, wobei die Sicherheitsfunktion nur unter der zusätzlichen Bedingung durchgeführt wird, dass dieser während des Startvorgangs ermittelte Zuverlässigkeitswert oberhalb eines vorgegebenen Schwellwertes liegt, wobei I für dieses System (3-13) durch I$_{SPF}$ + I$_{RF}$ + I$_{MPF,L}$ + I$_{MPF,D}$ + I$_{MPF,P}$ gegeben ist und I$_S$ die Fehlerrate für das Auftreten eines beliebigen Fehlers in diesem System (3-13) ist.

10. Verfahren nach einem der Ansprüche 6 bis 9, **dadurch gekennzeichnet, dass** die Metadaten bereits während eines Startvorgangs des Fahrzeugs (2), insbesondere vor einem Fahrtbeginn, auf die Steuereinheit (4) übertragen werden, wobei zumindest ein Zuverlässigkeitswert des mindestens einen Zuverlässigkeitswerts der Daten in Abhängigkeit von dem Wert der Metrik M$_{MPF,L}$ nach der Norm ISO 26262

$$M_{MPF,L} = 1 - \frac{\sum\limits_{\text{safety-related HW elements}} (\lambda_{MPF,L})}{\sum\limits_{\text{safety-related HW elements}} (\lambda - \lambda_{SPF} - \lambda_{RF})}$$

ermittelt werden, wobei die Summe über mehrere der während der Durchführung des Verfahrens verwendeten elektrischen, elektronischen und/oder programmierbaren Systeme ausgeführt wird, in denen ein Fehler auftreten kann, der die Durchführung der Sicherheitsfunktion beeinträchtigen kann, wobei die Sicherheitsfunktion nur unter der zusätzlichen Bedingung durchgeführt wird, dass dieser Zuverlässigkeitswert oberhalb eines vorgegebenen Schwellwertes liegt, wobei 1 für dieses System (3-13) durch I$_{SPF}$ + I$_{RF}$ + I$_{MPF,L}$ + I$_{MPF,D}$ + I$_{MPF,P}$ gegeben ist und I$_S$ die Fehlerrate für das Auftreten eines beliebigen Fehlers in diesem System (3 - 13) ist.

11. Verfahren aus einem der vorangehenden Ansprüche, **dadurch gekennzeichnet, dass** die Funktionseinheit (5) eine aktive oder passive Schutzeinrichtung des Fahrzeugs (2) ist, **dadurch gekennzeichnet, dass**

    - die Funktionseinheit (5) ein elektronisches Bremssystem und die Sicherheitsfunktion eine automatische Bremskraftverstärkung ist und/oder dass
- die Funktionseinheit (5) ein Notbremsassistent und die Sicherheitsfunktion eine automatisch ausgelöste Voll- oder Teilbremsung des Fahrzeugs (2) ist, und/oder dass
- die Funktionseinheit (5) ein Ausweichassistent und die Sicherheitsfunktion ein automatisches Umfahren eines Hindernisses ist und/oder dass
- die Funktionseinheit (5) eine ESC-Einheit und die Sicherheitsfunktion ein automatisches Stabilisieren des Fahrzeugs (2), insbesondere durch eine Abbremsen eines oder mehrerer Räder des Fahrzeugs (2) und/oder durch ein Drosseln einer Motorleistung des Fahrzeugs (2), ist und/oder dass
- die Funktionseinheit (5) ein Airbag-System und die Sicherheitsfunktion ein Auslösen des Airbags ist.

12. Gesamtsystem (1) zum Durchführen einer Sicherheitsfunktion eines Fahrzeugs (2), umfassend das Fahrzeug und ein Kommunikationssystem, das eingerichtet ist, Daten, die für das Durchführen der Sicherheitsfunktion erforderlich sind, auf eine Steuereinheit (4) des Fahrzeugs (2) zu übertragen, wobei die Steuereinheit (4) eingerichtet ist, in Abhängigkeit von den übertragenen Daten Steuersignale zu erzeugen und auf eine Funktionseinheit (5) des Fahrzeugs (2) zu übertragen, wobei die Funktionseinheit (5) eingerichtet ist, die Sicherheitsfunktion in Abhängigkeit von den Steuersignalen auszuführen, wobei das Gesamtsystem (1) eingerichtet ist, in zeitlichen Abständen wiederholt Diagnosetests durchzuführen zum Überprüfen, ob in einem oder in mehreren elektrischen, elektronischen und/oder programmierbaren Systemen des Gesamtsystems ein Fehler oder eine Störung besteht, die die Durchführung der Sicherheitsfunktion beeinträchtigen kann, **dadurch gekennzeichnet, dass** das Kommunikationssystems außerdem eingerichtet ist, Metadaten der Daten auf die Steuereinheit (4) zu übertragen, wobei die Metadaten Informationen der genannten Systeme des Gesamtsystems beinhalten, wobei die Steuereinheit (4) eingerichtet ist, mittels der Steuereinheit (4) und in Abhängigkeit von diesen Informationen mindestens ein Zuverlässigkeitswert der Daten zu ermitteln, der

    - von der Wahrscheinlichkeit für das Auftreten von Störungen, die die Durchführung der Sicherheitsfunktion beeinträchtigen können und

- von der Wahrscheinlichkeit, dass ein Auftreten dieser Störungen mittels der Diagnosetests und/oder durch einen Fahrer des Fahrzeugs (2) rechtzeitig vor einer Beeinträchtigung der Sicherheitsfunktion erkannt wird,

abhängig ist, und Abhängigkeit von dem mindestens einen Zuverlässigkeitswert zu prüfen, ob die übertragenen Daten für das Durchführen der Sicherheitsfunktion zuverlässig sind.

**Claims**

1. Method for carrying out a safety function of a vehicle (2), in which data which is necessary for carrying out the safety function is transmitted to a control unit (4) of the vehicle (2) by means of at least one communication system (3), wherein control signals are generated by means of the control unit (4) as a function of the transmitted data and are transmitted to a functional unit (5) of the vehicle (2), wherein the safety function is carried out by means of the functional unit (5) as a function of the control signals, wherein diagnostic tests are carried out repeatedly at time intervals, wherein with the diagnostic tests it is checked whether a failure or a fault which can adversely affect the carrying out of the safety function is present in one or more of the electrical, electronic and/or programmable systems (3 - 13) used to carry out the method, **characterized in that** metadata of the data is transmitted to the control unit (4) by means of the communication system (3), wherein the metadata contains information about the systems used to carry out the method, wherein at least one reliability value of the data is determined by means of the control unit (4) using this information, which value is dependent

- on the probability of the occurrence of failures or faults which can adversely affect the carrying out of the safety function, and
- on the probability that an occurrence of these failures or faults will be detected by means of the diagnostic tests and/or by a driver of the vehicle (2) in good time before the safety function is adversely affected,

wherein by means of the control unit (4) it is checked, as a function of the at least one reliability value whether the transmitted data is reliable for carrying out the safety function.

2. Method according to Claim 1, **characterized in that**, if the data which is necessary for carrying out the safety function is not completely present or is not reliable,

- the data which is transmitted to the control unit (4) is not used to actuate the functional unit (5) and/or
- a deactivation signal is sent to the functional unit (5) by means of the control unit (4), wherein, after reception of this deactivation signal, the functional unit goes automatically into a safety mode in which the safety function cannot be carried out and/or
- the data is transmitted to the control unit (4) again after a predefined waiting time period, wherein the data is in this way transmitted frequently to the control unit (4) until the data is completely present and sufficiently reliable.

3. Method according to one of the preceding claims, **characterized in that** by means of the control unit (4) a signal generator of the vehicle (2) is actuated in order to signal to the driver whether the data which is necessary for carrying out the safety function is completely present and reliable.

4. Method according to one of the preceding claims, **characterized in that** if the data which is necessary for carrying out the safety function is not completely present or not reliable, by means of the control unit (4) the signal generator (17) is actuated in order to signal to the driver the instantaneous non-availability of the safety function.

5. Method according to one of the preceding claims, **characterized in that** the data is produced as a function of measurement signals of at least one measuring unit (12, 13).

6. Method according to one of the preceding claims, **characterized in that** the at least one reliability value is determined as a function of at least one of the failure rates $I_{SPF}$, $I_{RF}$, $I_{MPF}$, $I_{MTF, L}$, $I_{NTF,P}$, $I_{MPF,D}$, wherein each of these failure rates specifies the mean number of failures which occur within a time unit in an electrical, electronic and/or programmable system (3-13) which is used to carry out the method, wherein the respective failure rates each relate exclusively to the following types of failures:

$I_{SPF}$ Failures which, even when they occur alone, can adversely affect the carrying out of the safety function and the occurrence of which is not checked by the diagnostic tests and therefore also cannot be detected by the diagnostic tests in good time before the safety function is adversely affected;

$I_{PF}$: Failures which, even when they occur alone, can adversely affect the carrying out of the safety function and the occurrence of which is checked by the diagnostic tests but is not detected by the diagnostic tests in good time before the safety function is adversely affected;

$I_{MPF,L}$: Failures which, when they occur or are present at the same time as other failures, can adversely affect the carrying out of the safety function and the occurrence of which is not checked by the diagnostic tests;

$I_{MPF,D}$: Failures which, when they occur or are present at the same time as other failures, can adversely affect the carrying out of the safety function and the occurrence of which is checked by the diagnostic tests and detected in good time before the safety function is adversely affected;

$I_{MPF,P}$: Failures which, when they occur or are present at the same time as other failures, can adversely affect the carrying out of the safety function and the occurrence of which is detected in good time by the driver of the vehicle (2).

7. Method according to Claim 6, **characterized in that** at least one reliability value of the at least one reliability value of the data is determined as a function of at least one value of a diagnostic coverage $D_{CRF}$ in accordance with standard ISO 26262

$$DC_{RF} = \left(1 - \frac{\lambda_{RF}}{\lambda}\right) \times 100$$

of at least one of the electrical, electronic and/or programmable systems, used to carry out the method, wherein 1 is specified for this system (3-13) by $I_{SPF} + I_{RF} + I_{MPF,L} + I_{MPF,D} + I_{MPF,P}$, and $I_S$ is the failure rate for the occurrence of any failure in this system (3-13).

8. Method according to one of Claims 6 or 7, **characterized in that** at least one reliability value of the at least one reliability value of the data is determined as a function of the value of the metric $M_{SPF,RF}$ in accordance with standard ISO 26262

$$M_{SPF,RF} = 1 - \frac{\sum_{safety-related\ HW\ elements} (\lambda_{SPF} + \lambda_{RF})}{\sum_{safety-related\ HW\ elements} \lambda}$$

wherein the sum is formed over a plurality of electrical, electronic and programmable systems (3-13) which are used during the method and in which faults can occur which, alone or in combination with one another, can adversely affect the carrying out of the safety function, wherein 1 is specified for this system (3-13) by $I_{SPF} + I_{RF} + I_{MPF,L} + I_{MPF,D} + I_{MPF,P}$ and $I_S$ is the failure rate for the occurrence of any failure in this system (3 - 13).

9. Method according to one of Claims 6 to 8, **characterized in that** the metadata is already transmitted to the control unit (4) during a starting process of the vehicle (2), in particular before a start of a journey, wherein at least one reliability value of the at least one reliability value of the data is determined as a function of the value of the diagnostic coverage $DC_{MPF,L}$ in accordance with standard ISO 26262

$$DC_{MPF,L} = \left(1 - \frac{\lambda_{MPF,L}}{\lambda}\right) \times 100$$

of at least one of the electrical, electronic and/or programmable systems which are used to carry out the method, wherein the safety function is carried out only on the additional condition that this reliability value which is determined during the starting process is above a predefined threshold value, wherein 1 is specified for this system (3-13) by $I_{SPF} + I_{RF} + I_{MPF,L} + I_{MPF,D} + I_{MPF,P}$, and $I_S$ is the failure rate for the occurrence of any failure in this system (3-13).

10. Method according to one of Claims 6 to 9, **characterized in that** the metadata is already transmitted to the control unit (4) during a starting process of the vehicle (2), in particular before a start of a journey, wherein at least one reliability value of the at least one reliability value of the data is determined as a function of the value of the metric $M_{MPF,L}$ in accordance with standard ISO 26262

$$M_{MPF,L} = 1 - \frac{\sum_{safety-related\ HW\ elements} (\lambda_{MPF,L})}{\sum_{safety-related\ HW\ elements} (\lambda - \lambda_{SPF} - \lambda_{RF})},$$

wherein the sum is formed over a plurality of electrical, electronic and/or programmable systems which are used during the carrying out of the method and in which a failure which can adversely affect the carrying out of the safety function can occur, wherein the safety function is carried out only on the additional condition that this reliability value is above a predefined threshold value, wherein 1 is specified for this system (3-13) by $I_{SPF} + I_{RF} + I_{MPF,L} + I_{MPF,D} + I_{MPF,P}$, and Is is the failure rate for the occurrence of any failure in this system (3-13).

11. Method according to one of the preceding claims, **characterized in that** the functional unit (5) is an active or passive protection device of the vehicle (2), **characterized in that**:

    - the functional unit (5) is an electronic brake system and the safety function is an automatic brake booster, and/or **in that**

- the functional unit (5) is an emergency braking assistant and the safety function is an automatically triggered full-braking or partial-braking operation of the vehicle (2), and/or **in that**
- the functional unit (5) is an avoidance assistant and the safety function is automatic driving around an obstacle and/or **in that**
- the functional unit (5) is an ESC unit and the safety function is automatic stabilization of the vehicle (2), in particular by braking one or more wheels of the vehicle (2) and/or by throttling the engine power of the vehicle (2), and/or **in that**
- the functional unit (5) is an airbag system, and the safety function is triggering of the airbag.

12. Total system (1) for carrying out a safety function of a vehicle (2), comprising the vehicle and a communication system which is configured to transmit data which is necessary for carrying out the safety function to a control unit (4) of the vehicle (2), wherein the control unit (4) is configured to generate control signals as a function of the transmitted data and to transmit said control signals to a functional unit (5) of the vehicle (2), wherein the functional unit (5) is configured to implement the safety function as a function of the control signals, wherein the total system (1) is configured to carry out diagnostic tests repeatedly at time intervals in order to check whether a failure or a fault which can adversely affect the carrying out of the safety function is present in one or more electrical, electronic and/or programmable systems of the total system, **characterized in that** the communication system is also configured to transmit metadata of the data to the control unit (4), wherein the metadata contains information of the specified systems of the total system, wherein the control unit (4) is configured to determine at least one reliability value of the data by means of the control unit (4) and as a function of this information, which reliability value is dependent

- on the probability of the occurrence of faults which can adversely affect the carrying out of the safety function, and
- on the probability that an occurrence of these faults will be detected by means of the diagnostic tests and/or by a driver of the vehicle (2) in good time before the safety function is adversely affected,

and to check as a function of the at least one reliability value whether the transmitted data is reliable for carrying out the safety function.

## Revendications

1. Procédé pour la mise en oeuvre d'une fonction de sécurité d'un véhicule (2), dans lequel des données qui sont exigées pour la mise en oeuvre de la fonction de sécurité sont transmises à une unité de commande (4) du véhicule (2) au moyen d'au moins un système de communication (3), dans lequel des signaux de commande sont générés au moyen de l'unité de commande (4) en fonction des données transmises et sont transmis à une unité fonctionnelle (5) du véhicule (2), dans lequel la fonction de sécurité est mise en oeuvre au moyen de l'unité fonctionnelle (5) en fonction des signaux de commande, dans lequel des tests de diagnostic sont effectués de manière répétée à certains intervalles de temps, dans lequel il est vérifié à l'aide des tests de diagnostic si une erreur ou une perturbation se produit dans un ou plusieurs systèmes (3 - 11) électriques, électroniques et/ou programmables utilisés pour mettre en oeuvre le procédé, laquelle erreur ou perturbation peut perturber la mise en oeuvre de la fonction de sécurité, **caractérisé en ce que** des métadonnées des données sont transmises à l'unité de commande (4) au moyen du système de communication (3), dans lequel les métadonnées contiennent des informations concernant les systèmes utilisés pour la mise en oeuvre du procédé, dans lequel au moins une valeur de fiabilité des données est déterminée au moyen de l'unité de commande (4) en utilisant lesdites informations, ladite valeur de fiabilité dépendant

- de la probabilité d'apparition d'erreurs ou de perturbations qui peuvent perturber la mise en oeuvre de la fonction de sécurité, et
- de la probabilité qu'une apparition desdites erreurs ou perturbations soit identifiée en temps utile au moyen du test de diagnostic et/ou par un conducteur du véhicule (2) avant une perturbation de la fonction de sécurité,

dans lequel il est vérifié au moyen de l'unité de commande (4), en fonction de l'au moins une valeur de fiabilité, si les données transmises sont fiables pour la mise en oeuvre de la fonction de sécurité.

2. Procédé selon la revendication 1, **caractérisé en ce que**, dans le cas où les données nécessaires à la mise en oeuvre de la fonction de sécurité ne sont pas toutes présentes ou fiables,

- les données transmises à l'unité de commande (4) ne sont pas utilisées pour commander l'unité fonctionnelle (5) et/ou
- un signal de désactivation est envoyé à l'unité fonctionnelle (5) au moyen de l'unité de commande (4), dans lequel l'unité fonctionnelle, après réception dudit signal de désactivation, passe automatiquement dans un mode de sécurité dans lequel la fonction de sécurité ne peut pas être mise en oeuvre et/ou

- les données sont de nouveau transmises à l'unité de commande (4) après un intervalle de temps d'attente prédéterminé, dans lequel les données sont ainsi transmises à l'unité de commande (4) jusqu'à ce que les données soient toutes présentes et fiables.

3. Procédé selon l'une quelconque des revendications précédentes, **caractérisé en ce qu'**un générateur de signal du véhicule (2) est commandé au moyen de l'unité de commande (4) pour signaler au conducteur si les données nécessaires à la mise en oeuvre de la fonction de sécurité sont toutes présentes ou fiables.

4. Procédé selon l'une quelconque des revendications précédentes, **caractérisé en ce que**, dans le cas où les données nécessaires pour la mise en oeuvre de la fonction de sécurité ne sont pas toutes présentes ou fiables, le générateur de signal (17) est commandé au moyen de l'unité de commande (4) pour signaler au conducteur la non disponibilité momentanée de la fonction de sécurité.

5. Procédé selon l'une quelconque des revendications précédentes, **caractérisé en ce que** les données sont établies en fonction de signaux de mesure d'au moins une unité de mesure (12, 13).

6. Procédé selon l'une quelconque des revendications précédentes, **caractérisé en ce que** l'au moins une valeur de fiabilité est déterminée en fonction d'au moins l'un des taux d'erreur $I_{SPF}$, $I_{RF}$, $I_{MPF}$, $I_{MPF,L}$, $I_{MPF,P}$, $I_{MPF,D}$, dans lequel chacun desdits taux d'erreur représente le nombre moyen d'erreurs qui se produisent au cours d'une unité de temps dans un système (3 - 13) électrique, électronique et/ou programmable utilisé lors de la mise en oeuvre du procédé, dans lequel les taux d'erreur respectifs se rapportent respectivement exclusivement aux types d'erreurs suivants :

$I_{SPF}$ : Erreurs qui peuvent, lorsqu'elles se produisent seules, perturber la mise en oeuvre de la fonction de sécurité et dont les apparitions ne sont pas vérifiées par les tests de diagnostic et par conséquent, qui ne peuvent pas être établies en temps utile par les tests de diagnostic avant une perturbation de la fonction de sécurité ;

$I_{RF}$ : Erreurs qui peuvent perturber la mise en oeuvre de la fonction de sécurité même si elles se produisent seules et dont les apparitions peuvent néanmoins être vérifiées par les tests de diagnostic mais qui ne peuvent pas être établies en temps utile par les tests de diagnostic avant une perturbation de la fonction de sécurité ;

$I_{MPF,L}$ : Erreurs qui, lorsqu'elles se produisent ou sont présentes en même temps que d'autres erreurs, peuvent perturber la mise en oeuvre de la fonction de sécurité et dont les apparitions ne sont pas vérifiées par les tests de diagnostic ;

$I_{MPF,D}$ : Erreurs qui, lorsqu'elles se produisent ou sont présentes en même temps que d'autres erreurs, peuvent perturber la mise en oeuvre de la fonction de sécurité et dont les apparitions sont vérifiées par les tests de diagnostic et sont établies en temps utile avant une perturbation de la fonction de sécurité ;

$I_{MPF,P}$ : Erreurs qui, lorsqu'elles se produisent ou sont présentes en même temps que d'autres erreurs, peuvent perturber la mise en oeuvre de la fonction de sécurité et dont les apparitions sont établies en temps utile par le conducteur du véhicule (2).

7. Procédé selon la revendication 6, **caractérisé en ce qu'**au moins une valeur de fiabilité, parmi lesdites valeurs de fiabilité des données, est déterminée en fonction d'au moins une valeur d'un taux de couverture de diagnostic $D_{CRF}$ conformément à la norme ISO 26262 :

$$DC_{RF} = \left(1 - \frac{\lambda_{RF}}{\lambda}\right) \times 100$$

d'au moins l'un des systèmes électriques, électroniques et/ou programmables utilisés pour la mise en oeuvre du procédé, dans lequel 1 est donné pour ledit système (3 - 13) par $I_{SPF} + I_{RF} + I_{MPF,L} + I_{MPF,D} + I_{MPF,P}$ et Is est le taux d'erreur correspondant à l'apparition d'une erreur quelconque dans ledit système (3 - 13).

8. Procédé selon l'une quelconque des revendications 6 ou 7, **caractérisé en ce qu'**au moins une valeur de fiabilité, parmi lesdites valeurs de fiabilité des données, est déterminée en fonction de la valeur de la métrique $M_{SPF,RF}$ conformément à la norme ISO 26262 :

$$M_{SPF,RF} = 1 - \frac{\sum\limits_{safety-related\ HW\ elements}(\lambda_{SPF} + \lambda_{RF})}{\sum\limits_{safety-related\ HW\ elements}\lambda},$$

dans lequel la somme est calculée sur plusieurs systèmes (3 - 13) électriques, électroniques et programmables utilisés pendant le procédé, systèmes dans lesquels des perturbations peuvent se produire, celles-ci pouvant perturber, seules ou combinées les unes aux autres, la mise en oeuvre de la fonction de sécurité, dans lequel 1 est donné pour lesdits sys-

tèmes (3 - 13), par $I_{SPF} + I_{RF} + I_{MPF,L} + I_{MPF,D} + I_{MPF,P}$ et Is est le taux d'erreur correspondant à l'apparition d'une erreur quelconque dans ledit système (3 - 13).

9. Procédé selon l'une quelconque des revendications 6 à 8, **caractérisé en ce que** les métadonnées sont déjà transmises pendant un processus de démarrage du véhicule (2) à l'unité de commande (4), notamment avant le début d'un trajet, dans lequel au moins une valeur de fiabilité, parmi lesdites valeurs de fiabilité des données, est déterminée en fonction de la valeur du taux de couverture de diagnostic $DC_{MPF,L}$ conformément à la norme ISO 26262 :

$$DC_{MPF,L} = \left( 1 - \frac{\lambda_{MPF,L}}{\lambda} \right) \times 100$$

d'au moins l'un des systèmes électriques, électroniques et/ou programmables utilisés pour la mise en oeuvre du procédé, dans lequel la fonction de sécurité n'est mise en oeuvre qu'à la condition supplémentaire que ladite valeur de fiabilité déterminée pendant le processus de démarrage se situe au-dessus d'une valeur de seuil prédéterminée, dans lequel 1 est donné pour ledit système (3 - 13) par $I_{SPF} + I_{RF} + I_{MPF,L} + I_{MPF,D} + I_{MPF,P}$ et Is est le taux d'erreur correspondant à l'apparition d'une erreur quelconque dans ledit système (3 - 13).

10. Procédé selon l'une quelconque des revendications 6 à 9, **caractérisé en ce que** les métadonnées sont déjà transmises à l'unité de commande (4) pendant un processus de démarrage du véhicule (2), notamment avant le début d'un trajet, dans lequel au moins une valeur de fiabilité, parmi lesdites valeurs de fiabilité des données, est déterminée en fonction de la valeur de la métrique $M_{MPF,L}$ conformément à la norme ISO 26262 :

$$M_{MPF,L} = 1 - \frac{\displaystyle\sum_{safety-related\ HW\ elements} (\lambda_{MPF,L})}{\displaystyle\sum_{safety-related\ H\ Welements} (\lambda - \lambda_{SPF} - \lambda_{RF})},$$

dans lequel la somme est calculée sur plusieurs systèmes (3 - 13) électriques, électroniques et/ou programmables utilisés pendant la mise en oeuvre du procédé, systèmes dans lesquels une erreur peut se produire, laquelle erreur peut perturber la mise en oeuvre de la fonction de sécurité, dans lequel la fonction de sécurité n'est mise en oeuvre qu'à la condition supplémentaire que ladite valeur de fiabilité se situe au-dessus d'une valeur de seuil prédéterminée, dans lequel 1 est donné pour ledit système (3 - 13) par $I_{SPF} + I_{RF} + I_{MPF,L} + I_{MPF,D} + I_{MPF,P}$ et $I_S$ est le taux d'erreur correspondant à l'apparition d'une erreur quelconque dans ledit système (3 - 13).

11. Procédé selon l'une quelconque des revendications précédentes, **caractérisé en ce que** l'unité fonctionnelle (5) est un dispositif de sécurité active ou passive du véhicule (2), **caractérisé en ce que**

- l'unité fonctionnelle (5) est un système de freinage électronique et la fonction de sécurité est une amplification automatique de la force de freinage et/ou **en ce que**
- l'unité fonctionnelle (5) est un système d'assistance au freinage d'urgence et la fonction de sécurité est un freinage total ou partiel déclenché automatiquement du véhicule (2) et/ou **en ce que**
- la fonction de sécurité (5) est un système d'aide à l'évitement et la fonction de sécurité est un contournement automatique d'un obstacle et/ou **en ce que**
- la fonction de sécurité (5) est une unité ESC et la fonction de sécurité est une stabilisation automatique du véhicule (2), notamment par un freinage d'une ou plusieurs roues du véhicule (2) et/ou par une réduction d'une puissance du moteur du véhicule (2) et/ou **en ce que**
- l'unité fonctionnelle (5) est un système à coussin gonflable et la fonction de sécurité est un déclenchement du coussin gonflable.

12. Système intégral (1) destiné à mettre en oeuvre une fonction de sécurité d'un véhicule (2), comprenant le véhicule et un système de communication qui est conçu pour transmettre des données exigées pour la mise en oeuvre de la fonction de sécurité à une unité de commande (4) du véhicule (2), dans lequel l'unité de commande (4) est conçue pour générer des signaux de commande en fonction des données transmises et pour les transmettre à une unité fonctionnelle (5) du véhicule (2), dans lequel l'unité fonctionnelle (5) est conçue pour mettre en oeuvre la fonction de sécurité en fonction des signaux de commande, dans lequel le système intégral (1) est conçu pour réaliser de manière répétée à certains intervalles de temps des tests de diagnostic permettant de vérifier si une erreur ou une perturbation se produit dans un ou plusieurs systèmes électriques, électroniques et/ou programmables du système intégral, laquelle erreur ou perturbation peut perturber la mise en oeuvre de la fonction de sécurité, **caractérisé en ce que** le système de communication est en outre conçu pour transmettre des métadonnées des données à l'unité de commande (4), dans lequel les métadonnées contiennent des informations concernant lesdits systèmes du système intégral, dans lequel l'unité de commande (4) est conçue pour déterminer au moins une valeur de fiabilité des données au moyen de l'unité de commande (4) et en fonction desdites informations, ladite valeur de fiabilité dépendant

- de la probabilité de l'apparition de perturbations qui peuvent perturber la mise en oeuvre de la fonction de sécurité et
- de la probabilité qu'une apparition desdites perturbations soit identifiée en temps utile au moyen des tests de diagnostic et/ou par un conducteur du véhicule (2) avant une perturbation de la fonction de sécurité,

et pour vérifier, en fonction de ladite au moins une valeur de fiabilité, si les données transmises sont fiables pour la mise en oeuvre de la fonction de sécurité.

Fig. 1

E1 – Schilderbrücke liefert 2 sicherheitsrelevante Informationen
- Nebel
- Geschwindigkeitsbegrenzung 60km/h
E2 – Information wird an Verkehrsleitzentrale übertragen
E3 – Information wird den Fahrzeugen auf relevanten Strecken angeboten

$$Ampel := f(\lambda_{MFxx}, DCxx)$$

E1/E2/E3 – Infrastrukturinformation
E4/E5        – onboard Information
E9           – Fahrstrategiemanager

Fig. 2

EP 2 891 264 B1

| Maßnahmen | | | | | | |
|---|---|---|---|---|---|---|
| **Fehler** | Laufende Nummer | Zeitmarke | Empfangs-bestätigung | Kennung für Sender Empfänger | Daten-sicherung | Redundanz mit Kreuz-vergleich |
| Wiederholung | X | X | | | | X |
| Verlust | X | | X | | | X |
| Einfügung | X | | X | X | | X |
| Falsche Abfolge | X | X | | | | X |
| Nachrichten-verfälschung | | | X | | X | |
| Verzögerung | | X | | | | |
| Kopplung sicher und nicht sicher | | | X | X | | |

Fig. 3

EP 2 891 264 B1

Fig. 4

Fahrer will Primary Control abgegeben.

System meldet Fahrer die Übernahme der Primary Control

a. System will System meldet Abgabe Primary Control
b. Fahrer will Primary Control übernehmen

Fahrer hat Primary Control übernommen

| Fahrer führt | Fahrer – System- Wechsel | System - führt | System - Fahrer – Wechsel | Fahrer führt |

| System Monitoring | Fahrer Monitoring | System Monitoring |
| Fahrer Primary Control | System Primary Control | Fahrer Primary Control |

Fig. 5

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Nicht-Patentliteratur**

- Architectural design and reliability analysis of a fail-operational brake-by-wire system from ISO 26262 perspectives. **PURNENDU SINHA.** Reliability Engineering And System Safety. Elsevier Applied Science, 15. Marz 2011, vol. 96, 1349-1359